# EUROPEAN PATENT SPECIFICATION

(11) **EP 3 290 303 B1**
(45) Date of publication and mention of the grant of the patent: **02.10.2019**
(21) Application number: 17188623.7
(22) Date of filing: 30.08.2017
(51) Int. Cl.: G08G 1/16, B62D 15/02

(54) **PARKING EXIT ASSIST DEVICE**
PARKPLATZAUSFAHRASSISTENZVORRICHTUNG
DISPOSITIF D'ASSISTANCE DE SORTIE DE STATIONNEMENT

(30) Priority: 31.08.2016 JP 2016169501
(43) Date of publication of application: 07.03.2018
(73) Proprietor: Honda Motor Co., Ltd., Minato-ku Tokyo 107-8556 (JP); Aisin Seiki Kabushiki Kaisha, Kariya-shi, Aichi 448-8650 (JP)
(72) Inventor: IWAMI, Hiroshi, Saitama, 351-0193 (JP); FURUKI, Satoko, Saitama, 351-0193 (JP); INAGAKI, Hiroki, Kariya-shi, Aichi 448-8650 (JP); HIRATA, Hironori, Kariya-shi, Aichi 448-8650 (JP); ISHIHARA, Masahiro, Nagoya-shi, Aichi 450-0002 (JP)
(74) Representative: Feller, Frank

(56) References cited:
- EP-A1- 2 230 155
- DE-A1-102007 029 773
- DE-A1-102008 025 219
- DE-A1-102013 019 830

## Description

### BACKGROUND OF THE INVENTION

### Field of the Invention:

The present invention relates to a parking exit assist device configured to assist a vehicle in pulling out from a parking space.

### Description of the Related Art:

Conventionally, a parking exit assist device has been known that assists a vehicle in pulling out from a parking space. For example, a parking exit assist technique has been developed in which, when a parallel parked vehicle pulls out from a parking space, the driver is guided to perform forward and reverse operations of the vehicle, together with carrying out automatic steering.

In Japanese Laid-Open Patent Publication No. 2014-121984, a parking exit assist device is proposed in which, if a vehicle is capable of pulling out from a parking space without turning back steering, automatic steering is performed so as to increase the steering angle with respect to a target steering angle set corresponding to a distance between the vehicle and a front obstacle and a rear obstacle. In accordance with this feature, it is described that, after termination of the assist control, even if the driver releases the steering wheel, and the steering angle returns by a return amount in accordance with the steering characteristics of the vehicle, collision with an obstacle in front of the vehicle can be avoided.

Document DE 10 2008 025 219 A1 which is considered to be closest prior art discloses a parking exit assist device comprising the features of the preamble of claim 1. Furthermore, documents EP 2 230 155 A1, DE 10 2013 019 830 A1 and DE 10 2007 029 773 A1-D4 shall be mentioned at this point.

### SUMMARY OF THE INVENTION

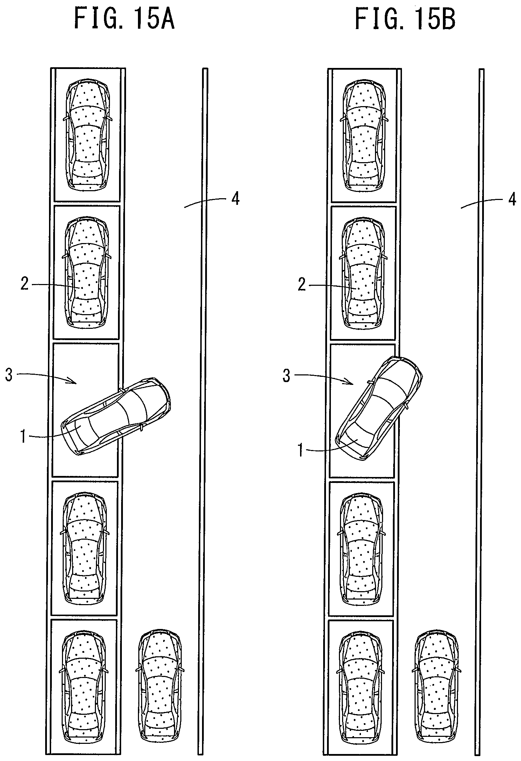

However, in the device proposed in Japanese Laid-Open Patent Publication No. 2014-121984, if the driver grips the handle (steering wheel) in a state in which an increase is carried out with respect to the target steering angle, the following inconvenience may occur. FIGS. 15A and 15B are diagrams showing a state in which a user's own vehicle 1 is pulling out from a parallel parking space 3 while avoiding another vehicle 2 in front of the user's own vehicle 1, and the driver is attempting to merge into a travel lane 4. FIG. 15A shows a case in which the driver has gripped the steering wheel, and FIG. 15B shows a state in which the driver has released the steering wheel. In the case that the driver has gripped the steering wheel, the present steering angle (hereinafter referred to as a present steering angle) is increased in a clockwise direction with respect to the target steering angle. In the case that the driver has gripped the steering wheel (FIG. 15A), the angle of the user's own vehicle 1 in the vehicle longitudinal direction with respect to the direction of the travel lane 4 becomes greater in comparison with the case in which the driver has released the steering wheel (FIG. 15B). Therefore, there is a concern that the driver will need to significantly turn back steering of the steering wheel in a counterclockwise direction in order for the user's own vehicle to merge into the travel lane 4.

The present invention has been devised with the aim of solving the aforementioned problem, and has the object of providing a parking exit assist device, which is capable of reducing the steering burden of the driver after pulling out from a parking space has been completed.

A parking exit assist device according to the present invention comprises a front detection unit configured to detect at least a frontward distance from a user's own vehicle to a front obstacle in front of the user's own vehicle, a rear detection unit configured to detect at least a backward distance from the user's own vehicle to a rear obstacle behind the user's own vehicle, a target steering angle setting unit configured to set a size of a target steering angle to a first steering angle, in a case that a travel direction of the user's own vehicle is switched from one to another or from the other to the one of a forward direction and a reverse direction, and an assist control unit configured to carry out an assist control to set a steering angle to the target steering angle.

In an event that at least one from among the following three conditions is satisfied,
first condition: a travel distance of the user's own vehicle from having switched the travel direction from the one to the other and until switching back from the other to the one is greater than or equal to a predetermined distance;
second condition: when the travel direction is the one, an angle of a detected direction of the front obstacle as detected by the front detection unit with respect to a vehicle longitudinal direction of the user's own vehicle, or a detected direction of the rear obstacle as detected by the rear detection unit with respect to the vehicle longitudinal direction of the user's own vehicle is equal to or greater than a predetermined angle; and
third condition: an angle of a current vehicle longitudinal direction of the user's own vehicle with respect to the vehicle longitudinal direction of the user's own vehicle at a time the assist control was started is greater than or equal to a predetermined angle,
when the travel direction is switched from the other to the one, the target steering angle setting unit is configured to limit and set the size of the target steering angle to a second steering angle which is smaller than the first steering angle.

If the user's own vehicle can pull out from a parking space without turning back steering in the travel direction after the travel direction has been switched, and if it is possible to pull out from the parking space with a steering angle which is smaller than the maximum steering angle capable of being controlled by the assist control unit, then the second steering angle, which is smaller than the maximum steering angle (first steering angle) capable of being controlled, can be set as the target steering angle. Consequently, compared to a case in which the target steering angle is set to the first steering angle at a time that the user's own vehicle is capable of exiting from parking without turning back steering, it is possible to reduce the angle of the user's own vehicle in the vehicle longitudinal direction immediately prior to exiting from parking with respect to the direction of the travel lane into which the user's own vehicle intends to merge. Thus, the amount of steering made by the driver can be reduced when the user's own vehicle merges with the travel lane. Further, it is possible to suppress the amount at which the user's own vehicle enters into the travel lane. Thus, a sense of security can be given to the driver of the user's own vehicle, and a sense of anxiety imparted to drivers of other vehicles traveling in the travel lane can be reduced.

Further, the target steering angle setting unit is configured to set the second steering angle to be smaller as the travel distance of the user's own vehicle from having switched the travel direction from the one to the other and until switching back from the other to the one becomes longer, set the second steering angle to be smaller as the angle of the detected direction of the front obstacle as detected by the front detection unit with respect to the vehicle longitudinal direction of the user's own vehicle, or the detected direction of the rear obstacle as detected by the rear detection unit with respect to the vehicle longitudinal direction of the user's own vehicle becomes larger, and/or set the second steering angle to be smaller as the angle of the current vehicle longitudinal direction of the user's own vehicle with respect to the vehicle longitudinal direction of the user's own vehicle at the time that the assist control was started becomes larger.

It is possible to set the second steering angle to the smallest possible steering angle, while still being a steering angle at which the user's own vehicle is capable of avoiding the front obstacle or the rear obstacle. Consequently, it is possible to reduce the angle of the user's own vehicle in the vehicle longitudinal direction immediately prior to exiting from parking with respect to the direction of the travel lane into which the user's own vehicle intends to merge. Thus, the amount of steering made by the driver can be reduced when the user's own vehicle merges with the travel lane.

Further, according to the present invention the target steering angle setting unit is configured to set the first steering angle to a maximum steering angle capable of being controlled by the assist control unit. It is possible to minimize the turning radius of the user's own vehicle. Thus, the number of times at which steering is turned back until the user's own vehicle is able to pull out from the parking space can be reduced.

Further, the one of the travel directions is the forward direction, and the other is the reverse direction, and in a case that the travel direction is switched from the forward direction to the reverse direction, and when at least one from among the three conditions of the first condition, the second condition, and the third condition is satisfied, the target steering angle setting unit is configured to set the target steering angle to the second steering angle, and set the second steering angle responsive to the travel distance in the reverse direction of the user's own vehicle from having switched the travel direction from the forward direction to the reverse direction and until switching back from the reverse direction to the forward direction.

It is possible to set the second steering angle corresponding to the travel distance when the user's own vehicle moves in reverse at a time of backward movement and before the travel direction of the user's own vehicle is switched from the reverse direction to the forward direction. The second steering angle can thus be set as small as possible while enabling the front obstacle to be avoided. Consequently, it is possible to reduce the angle of the user's own vehicle in the vehicle longitudinal direction immediately prior to exiting from parking with respect to the direction of the travel lane into which the user's own vehicle intends to merge. Thus, the amount of steering made by the driver can be reduced when the user's own vehicle merges with the travel lane.

In a case it is determined that pulling out from a parking space is possible, in accordance with a condition of the front obstacle as detected by the front detection unit at a time of switching the travel direction from the forward direction to the reverse direction, and next time, in accordance with forward traveling after having switched the travel direction from the reverse direction to the forward direction, the target steering angle setting unit is configured to set the second steering angle to a steering angle between a maximum steering angle capable of being controlled by the assist control unit and a minimum steering angle capable of avoiding the front obstacle.

In the case that the user's own vehicle is capable of exiting from parking without turning back steering, it is possible to prevent the target steering angle from becoming excessively large. Thus, during a situation of parallel parking, it is possible to reduce the angle of the user's own vehicle in the vehicle longitudinal direction immediately prior to exiting from parking with respect to the direction of the travel lane into which the user's own vehicle merges. Owing thereto, the amount of steering made by the driver can be reduced when the user's own vehicle merges with the travel lane.

In accordance with the parking exit assist device according to the present invention, the amount of steering made by the driver can be reduced when the user's own vehicle merges with the travel lane.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a block diagram showing a configuration of a user's own vehicle equipped with a parking exit assist device according to an embodiment of the present invention;
FIG. 2 is a schematic plan view showing an exemplary arrangement of a camera group and a sonar group on the user's own vehicle of FIG. 1;
FIG. 3 is a schematic diagram showing the distance region with respect to front sonar devices;
FIG. 4 is a schematic diagram showing a series of operations of the user's own vehicle in accordance with a parking exit assist control;
FIG. 5 is a state transition diagram of a parking exit assist control mode;
FIG. 6 is a flowchart showing the flow of processes in the parking exit assist control mode of an assist ECU;
FIG. 7 is a flowchart showing the flow of processes in a forward traveling mode of the assist ECU;
FIG. 8 is a flowchart showing the flow of processes in the forward traveling mode of the assist ECU;
FIG. 9 is a map of a second steering angle;
FIG. 10 is a flowchart showing the flow of processes in a rearward traveling mode of the assist ECU;
FIG. 11 is a diagram for explaining setting of an exit-from-parking trajectory in the forward traveling mode;
FIG. 12A is a diagram showing a positional relationship between the user's own vehicle, another vehicle in front of, and another vehicle behind the user's own vehicle during the parking exit assist control after an Nth turning back of steering;
FIG. 12B is a diagram showing a positional relationship between the user's own vehicle, the other vehicle in front of, and the other vehicle behind the user's own vehicle during the parking exit assist control after an (N + 1)th turning back of steering;
FIG. 12C is a diagram showing a positional relationship between the user's own vehicle, the other vehicle in front of, and the other vehicle behind the user's own vehicle during the parking exit assist control after an (N + 2)th turning back of steering;
FIG. 13A is a diagram showing a positional relationship between the user's own vehicle, another vehicle in front of, and another vehicle behind the user's own vehicle during the parking exit assist control after an Nth turning back of steering;
FIG. 13B is a diagram showing a positional relationship between the user's own vehicle, the other vehicle in front of, and the other vehicle behind the user's own vehicle during the parking exit assist control after an (N + 1)th turning back of steering;
FIG. 13C is a diagram showing a positional relationship between the user's own vehicle, the other vehicle in front of, and the other vehicle behind the user's own vehicle during the parking exit assist control after an (N + 2)th turning back of steering;
FIG. 14A is a diagram showing a positional relationship between the user's own vehicle, another vehicle in front of, and another vehicle behind the user's own vehicle during the parking exit assist control after an Nth turning back of steering;
FIG. 14B is a diagram showing a positional relationship between the user's own vehicle, the other vehicle in front of, and the other vehicle behind the user's own vehicle during the parking exit assist control after an (N + 1)th turning back of steering;
FIG. 14C is a diagram showing a positional relationship between the user's own vehicle, the other vehicle in front of, and the other vehicle behind the user's own vehicle during the parking exit assist control after an (N + 2)th turning back of steering;
FIG. 15A shows a case in which the driver is gripping the steering wheel and is pulling out from a parallel parking space; and
FIG. 15B shows a state in which the driver has released the steering wheel and is pulling out from a parallel parking space.

### DESCRIPTION OF THE PREFERRED EMBODIMENTS

A preferred embodiment of a parking exit control device according to the present invention will be described in detail below with reference to the accompanying drawings.

### [Configuration of Parking Exit Assist Device 12]

### <Configuration of User's Own Vehicle 10>

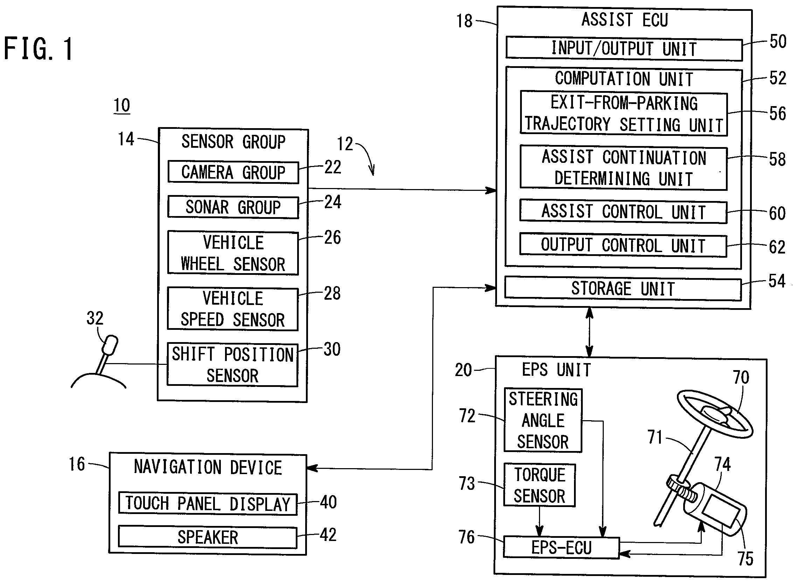

FIG. 1 is a block diagram showing a configuration of a user's own vehicle 10 equipped with a parking exit assist device 12 according to an embodiment of the present invention.

The parking exit assist device 12 is a device that assists in pulling out of the user's own vehicle 10 from a parking space in accordance with automatic steering, by performing an assist control including a parking exit (PO; Pull Out) assist control. The parking exit assist device 12 primarily assists in pulling out from a parking space at a time of parallel parking. In this instance, operation of a steering wheel 70 is carried out automatically by the parking exit assist device 12. Operations of the accelerator pedal and the brake pedal (neither of which is shown) as well as a shift lever 32 are performed by the driver of the user's own vehicle 10.

The parking exit assist device 12 is equipped with a sensor group 14 that detects various physical quantities used in the assist control, a navigation device 16, an ECU (Electronic Control Unit, hereinafter referred to as an assist ECU 18) that administers the assist control, and an electric power steering system unit (hereinafter referred to as an EPS unit 20).

As shown in FIG. 1, the sensor group 14 includes a camera group 22, a sonar group 24, a vehicle wheel sensor 26, a vehicle speed sensor 28, and a shift position sensor 30.

The camera group 22 is made up from one or a plurality of cameras capable of capturing images of the surrounding periphery of the user's own vehicle 10, and sequentially outputs captured image signals indicative of peripheral images of the user's own vehicle 10. The sonar group 24 is made up from one or a plurality of sonar devices capable of emitting sound waves and receiving reflected sounds from other objects, and sequentially outputs detection signals correlated with a distance Dis from the user's own vehicle 10.

The vehicle wheel sensor 26 is an angle sensor or a displacement sensor that detects angles of rotation of the left and right front wheels and/or the left and right rear wheels (none of which are shown), and outputs a number of detection pulses correlated with a travel distance of the user's own vehicle 10. The vehicle speed sensor 28 is a sensor that detects a speed (i.e., a vehicle speed) of the user's own vehicle 10, and is configured to be capable of detecting the vehicle speed, for example, from an amount of rotation of a non-illustrated drive shaft of a transmission.

The shift position sensor 30 outputs a detection signal indicative of a shift position selected in accordance with operation of the shift lever 32 (also referred to as a selector). The shift lever 32, for example, is a device that enables selection of any one type from among six types of shift positions, including "P" (parking range), "R" (reverse range), "N" (neutral range), "D" (drive range), "2" (second range), or "L" (low range).

The navigation device 16 detects the current position of the user's own vehicle 10 using a GPS (Global Positioning System), and provides guidance to a vehicle occupant including the driver along a route to a destination point. The navigation device 16 includes a touch panel display 40, a speaker 42, and a storage device (not shown) in which a map information database is constructed. The navigation device 16 functions as an HMI (Human-Machine Interface) in the parking exit assist device 12.

The assist ECU 18 includes as hardware components thereof an input/output unit 50, a computation unit 52, and a storage unit 54. The computation unit 52, for example, is a processor such as a CPU or the like, and by reading out and executing programs stored in the storage unit 54, functions as an exit-from-parking trajectory setting unit 56 (target steering angle setting unit), an assist continuation determining unit 58, an assist control unit 60, and an output control unit 62.

The EPS unit 20 is configured to include the steering wheel 70, a steering column 71, a steering angle sensor 72, a torque sensor 73, an EPS motor 74, a resolver 75, and an EPS-ECU 76.

The steering angle sensor 72 detects the steering angle of the steering wheel 70. The torque sensor 73 detects a torque applied to the steering wheel 70. The EPS motor 74 applies a driving force or a reaction force to the steering column 71 which is connected to the steering wheel 70. The resolver 75 detects an angle of rotation of the EPS motor 74.

The EPS-ECU 76 is a device adapted to control the EPS unit 20 in its entirety, and similar to the assist ECU 18, includes as hardware components thereof an input/output unit, a computation unit, and a storage unit (none of which are shown).

### <Detailed Configuration of Camera Group 22 and Sonar Group 24>

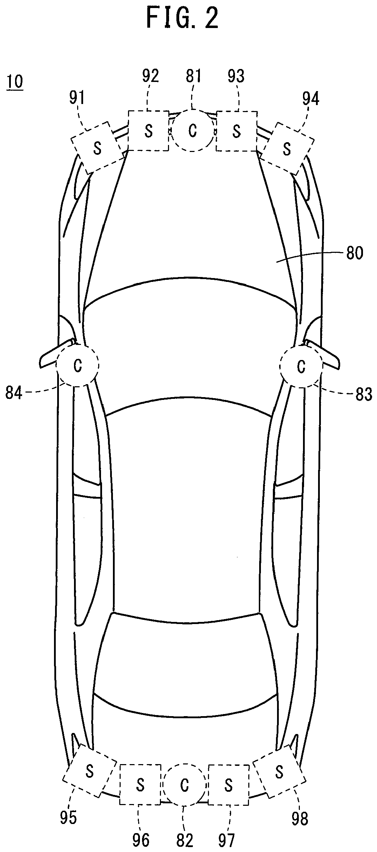

FIG. 2 is a schematic plan view showing an exemplary arrangement of the camera group 22 and the sonar group 24 on the user's own vehicle 10 of FIG. 1. For example, the camera group 22 is made up from four cameras including a front camera 81 at the front of a vehicle body 80, a rear camera 82 at the rear of the vehicle body 80, a right side camera 83 on a lower outer side of the driver's seat side door mirror, and a left side camera 84 on a lower outer side of the passenger seat side door mirror.

The sonar group 24 is constituted by four front sonar devices at the front of the vehicle body 80, including a front (corner left) sonar device 91, a front (center left) sonar device 92, a front (center right) sonar device 93, and a front (corner right) sonar device 94, together with four rear sonar devices at the rear of the vehicle body 80, including a rear (corner left) sonar device 95, a rear (center left) sonar device 96, a rear (center right) sonar device 97, and a rear (corner right) sonar device 98.

The front (center left) sonar device 92 and the front (center right) sonar device 93 are provided at substantially symmetrical positions with respect to a center line passing through the center of the vehicle body 80, and extending in the vehicle longitudinal direction when the vehicle body 80 is viewed from above. The front (center) sonar devices 92, 93 are capable of emitting sound waves toward the front of the vehicle body 80, and are arranged to be capable of receiving sound waves from a region in front of the vehicle body 80. The front (corner left) sonar device 91 and the front (corner right) sonar device 94 are provided at substantially symmetrical positions with respect to the center line passing through the center of the vehicle body 80, and extending in the vehicle longitudinal direction when the vehicle body 80 is viewed from above. The front (corner left) sonar device 91 is arranged more on the leftward outer side than the front (center left) sonar device 92 when the vehicle body 80 is viewed from above. The front (corner left) sonar device 91 is capable of emitting sound waves toward the left frontward direction of the vehicle body 80, and is arranged to be capable of receiving sound waves from a left front region in front of the vehicle body 80. The front (corner right) sonar device 94 is arranged more on the rightward outer side than the front (center right) sonar device 93 when the vehicle body 80 is viewed from above. The front (corner right) sonar device 94 is capable of emitting sound waves toward the right frontward direction of the vehicle body 80, and is arranged to be capable of receiving sound waves from a right front region in front of the vehicle body 80.

The rear (center left) sonar device 96 and the rear (center right) sonar device 97 are provided at substantially symmetrical positions with respect to a center line passing through the center of the vehicle body 80, and extending in the vehicle longitudinal direction when the vehicle body 80 is viewed from above. The rear (center) sonar devices 96, 97 are capable of emitting sound waves toward the rear of the vehicle body 80, and are arranged to be capable of receiving sound waves from a region at the rear of the vehicle body 80. The rear (corner left) sonar device 95 and the rear (corner right) sonar device 98 are provided at substantially symmetrical positions with respect to a center line in the vehicle longitudinal direction passing through the center of the vehicle body 80 when the vehicle body 80 is viewed from above. The rear (corner left) sonar device 95 is arranged more on the leftward outer side than the rear (center left) sonar device 96 when the vehicle body 80 is viewed from above. The rear (corner left) sonar device 95 is capable of emitting sound waves toward the left rearward direction of the vehicle body 80, and is arranged to be capable of receiving sound waves from a left rear region at the rear of the vehicle body 80. The rear (corner right) sonar device 98 is arranged more on the rightward outer side than the rear (center right) sonar device 97 when the vehicle body 80 is viewed from above. The rear (corner right) sonar device 98 is capable of emitting sound waves toward the right rearward direction of the vehicle body 80, and is arranged to be capable of receiving sound waves from a right rear region at the rear of the vehicle body 80.

Hereinafter, in the event that no distinction therebetween is required, the front (corner left) sonar device 91, the front (center left) sonar device 92, the front (center right) sonar device 93, and the front (corner right) sonar device 94 will be referred to collectively as front sonar devices 91 to 94. Further, in the event that no distinction therebetween is required, the rear (corner left) sonar device 95, the rear (center left) sonar device 96, the rear (center right) sonar device 97, and the rear (corner right) sonar device 98 will be referred to collectively as rear sonar devices 95 to 98. The front sonar devices 91 to 94 correspond to the forward detection region of the present invention, and the rear sonar devices 95 to 98 correspond to the rearward detection region of the present invention.

Further, in the event that no distinction therebetween is required, the front (corner left) sonar device 91 and the front (corner right) sonar device 94 will be referred to collectively as front (corner) sonar devices 91, 94, and in the event that no distinction therebetween is required, the front (center left) sonar device 92 and the front (center right) sonar device 93 will be referred to collectively as front (center) sonar devices 92, 93. In the event that no distinction therebetween is required, the rear (corner left) sonar device 95 and the rear (corner right) sonar device 98 will be referred to collectively as rear (corner) sonar devices 95, 98, and in the event that no distinction therebetween is required, the rear (center left) sonar device 96 and the rear (center right) sonar device 97 will be referred to collectively as rear (center) sonar devices 96, 97.

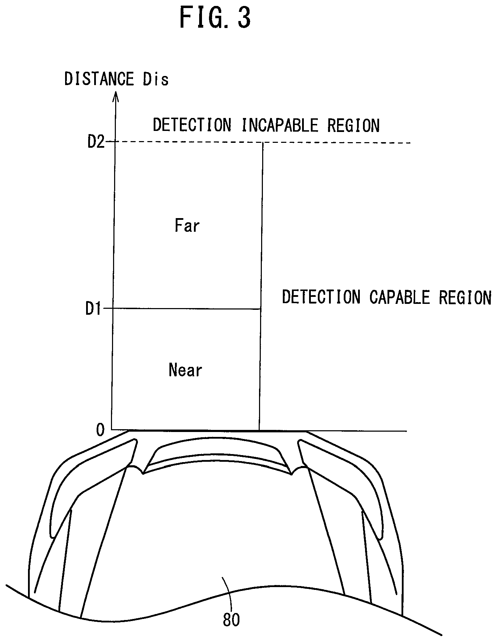

FIG. 3 is a schematic diagram showing the distance region with respect to the front (center) sonar devices 92, 93. In this instance, although an example is described with respect to the front (center) sonar devices 92, 93, the same features apply to the other sonar devices 91 and 94 to 98.

Depending on a distance Dis from the front (center) sonar devices 92, 93, the assist ECU 18 (computation unit 52) carries out a detection process by classifying the distance Dis into three distance regions. A distance region satisfying the inequality 0 < Dis ≤ D2 is defined as a "detection capable region". A distance region satisfying the inequality Dis > D2 is defined as a "detection incapable region". The "detection capable region" is further classified into two distance regions. More specifically, a distance region satisfying the inequality 0 < Dis ≤ D1 (< D2) is defined as a "near region". A distance region satisfying the inequality D1 < Dis ≤ D2 is defined as a "far region".

If the front (center) sonar devices 92, 93 detect another object in the "near region", the assist ECU 18 (computation unit 52) determines the detection result as being "near". If the front (center) sonar devices 92, 93 detect another object in the "far region", the assist ECU 18 (computation unit 52) determines the detection result as being "far". If the front (center) sonar devices 92, 93 detect another object in the "detection incapable region" (or in the case that another object could not be detected), the assist ECU 18 (computation unit 52) determines the detection result as being "undetected".

### [Operations of Parking Exit Assist Device 12]

### <Outline of Parking Exit Assist Control>

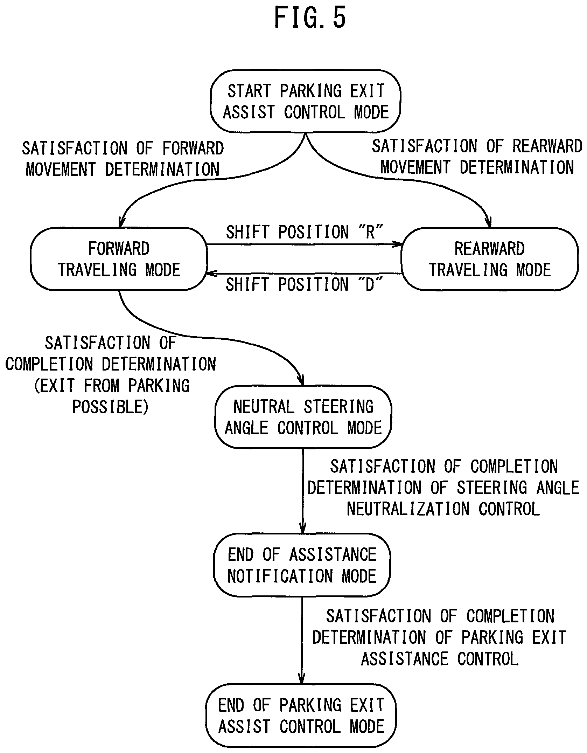

The parking exit assist device 12 according to the present embodiment is constituted as described above. Responsive to a driver's input operation via the navigation device 16 (see FIG. 1), the parking exit assist device 12 transitions into a "parking exit assist control mode", as will be described later with reference to FIG. 5, and initiates the parking exit assist control with respect to the user's own vehicle 10. During execution of the parking exit assist control, the navigation device 16 performs a guidance output (hereinafter, referred to simply as guidance) in relation to the parking exit assistance. More specifically, in accordance with the output control by the output control unit 62, visual information (a screen) in relation to the parking exit assistance is output to the touch panel display 40, and together therewith, audio information in relation to the parking exit assistance is output to the speaker 42.

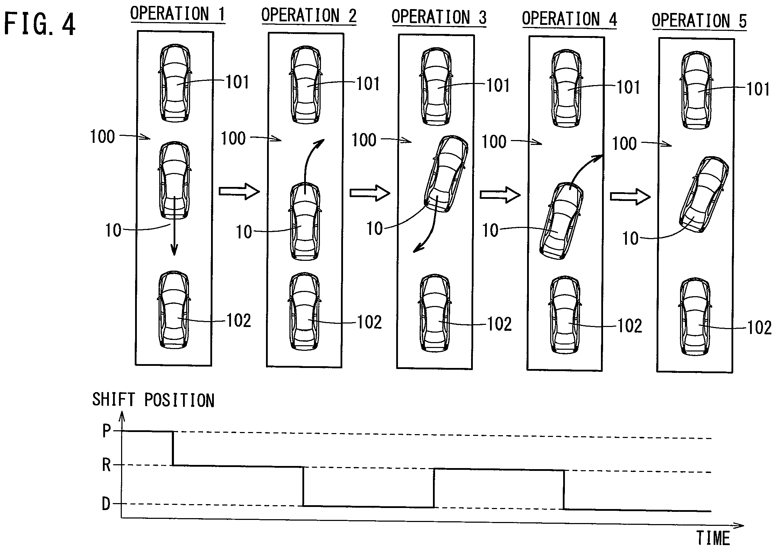

FIG. 4 is a schematic diagram showing a series of operations of the user's own vehicle 10 in accordance with the parking exit assist control. In this instance, it is assumed that another front vehicle 101 (front obstacle), the user's own vehicle 10, and another rear vehicle 102 (rear obstacle) are parked in a row in a parallel parking space 100. The user's own vehicle 10 is intending to pull out from the parking space in a rightward direction in FIG. 4.

In "OPERATION 1", the assist ECU 18 supplies an output signal to the navigation device 16 in order to carry out a rearward operation (departure command) of the user's own vehicle 10. In accordance with guidance provided by the navigation device 16, the driver operates the shift lever 32 to change the shift position from "P" to "R" and thereafter releases the brake pedal. The assist ECU 18 implements automatic steering so that a current steering angle (steering angle) θ of the steering wheel 70 becomes a neutral steering angle (= 0 degrees). Consequently, the user's own vehicle 10 moves straight backward under the action of a creep force. When the detection result of the rear sonar devices 95 to 98 becomes "near", the assist ECU 18 supplies an output signal to the navigation device 16 in order to carry out a stop operation (stop command) of the user's own vehicle 10. In accordance with guidance provided by the navigation device 16, the driver performs an operation to depress the brake pedal.

In "OPERATION 2", the assist ECU 18 supplies an output signal to the navigation device 16 in order to carry out a forward operation (departure command) of the user's own vehicle 10. In accordance with guidance provided by the navigation device 16, the driver operates the shift lever 32 to change the shift position from "R" to "D" and thereafter releases the brake pedal. The assist ECU 18 automatically performs steering in such a manner that the current steering angle θ of the steering wheel 70 becomes a target steering angle θtar (clockwise). As a result, the user's own vehicle 10 moves forward while turning to the right. When the detection result of one or more of the front sonar devices 91 to 94 becomes "near", the assist ECU 18 supplies an output signal to the navigation device 16 in order to carry out a stop operation (stop command) of the user's own vehicle 10. In accordance with guidance provided by the Navigation device 16, the driver performs an operation to depress the brake pedal.

In "OPERATION 3", the assist ECU 18 supplies an output signal to the navigation device 16 in order to carry out a rearward operation (departure command) of the user's own vehicle 10. In accordance with guidance provided by the navigation device 16, the driver operates the shift lever 32 to change the shift position from "D" to "R" and thereafter releases the brake pedal. The assist ECU 18 automatically performs steering in such a manner that the current steering angle θ of the steering wheel 70 becomes the target steering angle θtar (counterclockwise). As a result, the user's own vehicle 10 moves backward while turning to the left. When the detection result of the rear sonar devices 95 to 98 becomes "near", the assist ECU 18 supplies an output signal to the navigation device 16 in order to carry out a stop operation (stop command) of the user's own vehicle 10. In accordance with guidance provided by the navigation device 16, the driver performs an operation to depress the brake pedal.

In "OPERATION 4", the assist ECU 18 supplies an output signal to the navigation device 16 in order to carry out a forward operation (departure command) of the user's own vehicle 10. In accordance with guidance provided by the navigation device 16, the driver operates the shift lever 32 to change the shift position from "R" to "D" and thereafter releases the brake pedal. The assist ECU 18 automatically performs steering in such a manner that the current steering angle θ of the steering wheel 70 becomes the target steering angle θtar (clockwise). As a result, the user's own vehicle 10 moves forward while turning to the right. When the detection result of the front (center) sonar devices 92, 93 is "undetected" and the detection result of the front (corner) sonar devices 91, 94 is not "near" ("far" or "undetected"), the assist ECU 18 determines that pulling out from the parking space is possible.

In "OPERATION 5", the assist ECU 18 supplies an output signal to the navigation device 16 in order to issue a notification that the parking exit assistance has ended. The driver receives the notification issued by the navigation device 16, and grasps that the responsibility for driving has been handed over to the driver himself/herself. The driver departs from the parallel parking space 100 by pressing the accelerator pedal. Consequently, the parking space exiting operation of the user's own vehicle 10 is completed.

### <State Transition Diagram>

FIG. 5 is a state transition diagram of the "parking exit assist control mode". The "parking exit assist control mode" is made up from four modes, including a "forward traveling mode", a "rearward traveling mode", a "neutral steering angle control mode", and an "end of assistance notification mode".

Accompanying the occurrence of the "parking exit assist control mode", a transition is made to one of the "forward traveling mode" and the "rearward traveling mode". Normally, when the "parking exit control mode" takes place, the assist ECU 18 supplies an output signal to the navigation device 16 so as to provide guidance to change the shift position to "R". When the driver operates the shift lever 32 and the shift position becomes "R", a transition is made to the "rearward traveling mode". However, when the detection result of one or more of the rear sonar devices 95 to 98 becomes "near", the assist ECU 18 supplies an output signal to the navigation device 16 in order to provide guidance to change the shift position to "D". When the driver operates the shift lever 32 and the shift position becomes "D", a transition is made to the "forward traveling mode".

In the case that the shift position is changed from "D" to "R" in the "forward traveling mode", a transition is made from the "forward traveling mode" to the "rearward traveling mode".

In the case that the shift position is changed from "R" to "D" in the "rearward traveling mode", a transition is made from the "rearward traveling mode" to the "forward traveling mode".

If a completion determination (determination that "exiting from parking is possible") is satisfied in the "forward traveling mode", a transition is made to a "neutral steering angle control mode". The "exiting from parking is possible" determination is satisfied in the event that the detection result of the front (center) sonar devices 92, 93 is "undetected" and the detection result of the front (corner) sonar devices 91, 94 is not "near" ("far" or "undetected").

If a completion determination of the steering angle neutralization control is satisfied in the "neutral steering angle control mode", a transition is made to an "end of assistance notification mode". The completion determination of steering angle neutralization control is satisfied when the steering angle of the steering wheel 70 becomes a neutral position (a position in which the turning angle of the front wheels becomes neutral).

If a completion determination of the parking exit assist control is satisfied in the "end of assistance notification mode", the event of the "parking exit assist control mode" is terminated. The completion determination of the parking exit assist control is satisfied when the driver indicates an intention of having comprehended that the parking exit assist control is completed, for example, by touching a button on the touch panel display 40.

### <Control Flow>

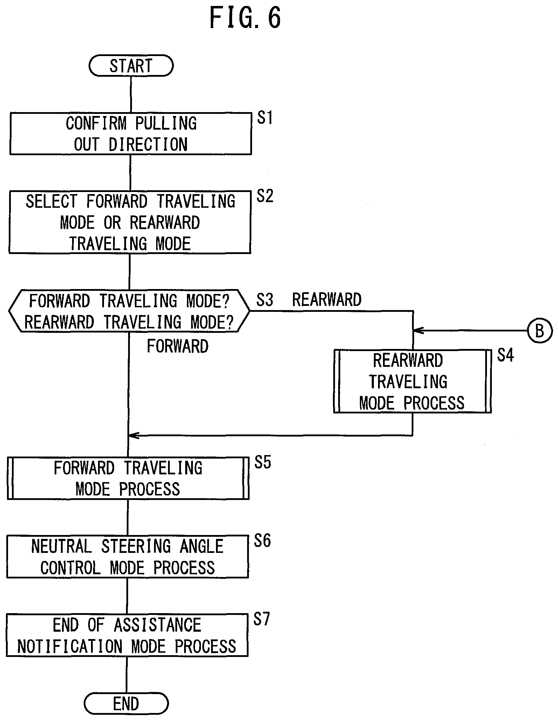

FIG. 6 is a flowchart showing the flow of processes in the "parking exit assist control mode" of the assist ECU 18.

In step S1, the assist ECU 18 confirms the direction of pulling out from parking. When the parking exit assist control is initiated, the output control unit 62 displays a button on the touch panel display 40 for selecting whether the direction of pulling out is either one of a right or a left direction. The driver selects the pulling out direction by touching the button of the touch panel display 40.

In step S2, the assist ECU 18 selects the "rearward traveling mode" or the "forward traveling mode" as the mode that is transitioned to first. In the driving exit assist control, although the control is basically started from the "rearward traveling mode", if an obstacle is located in close proximity behind the user's own vehicle 10, an exception is made, and the control is started from the "forward traveling mode". More specifically, if an obstacle is not present in close proximity behind the user's own vehicle 10, and the detection results of all of the rear sonar devices 95 to 98 are not "near", the "rearward traveling mode" is selected. On the other hand, if an obstacle is present in close proximity behind the user's own vehicle 10, and the detection result of one or more of the rear sonar devices 95 to 98 is "near", the "forward traveling mode" is selected.

Moreover, in step S2, in the case that the "rearward traveling mode" is selected as the mode to be transitioned to first, then in the process of the "rearward traveling mode" that was transitioned to initially, the assist ECU 18 performs a control so that the steering angle of the steering wheel 70 becomes a neutral steering angle. On the other hand, in step S2, if the "forward traveling mode" is selected as the mode to be transitioned to first, then in the process of the "forward traveling mode" that was transitioned to initially, the assist ECU 18 performs a control so that the steering angle of the steering wheel 70 becomes oriented in the pulling out direction of the user's own vehicle 10. Thereafter, in the processes of the "forward traveling mode" and the "rearward traveling mode", the assist ECU 18 controls the steering angles of the steering wheel 70 so that the user's own vehicle 10 is turned in the pulling out direction.

Moreover, the process of the "rearward traveling mode" that was transitioned to initially is indicative of a process of the "rearward traveling mode" which is carried out immediately after the start of the parking exit assist control, and in which neither the "rearward traveling mode" nor the "forward traveling mode" is carried out prior to the process of the "rearward traveling mode" that was transitioned to initially. Similarly, the process of the "forward traveling mode" that was transitioned to initially is indicative of a process of the "forward traveling mode" which is carried out immediately after the start of the parking exit assist control, and in which neither the "forward traveling mode" nor the "rearward traveling mode" is carried out prior to the process of the "forward traveling mode" that was transitioned to initially.

In step S3, the assist ECU 18 determines whether or not the selected mode is the "forward traveling mode" or the "rearward traveling mode". If the mode to be transitioned to is the "forward traveling mode", then in the assist ECU 18, the process proceeds to step S5. If the mode to be transitioned to is the "rearward traveling mode", then in the assist ECU 18, the process proceeds to step S4.

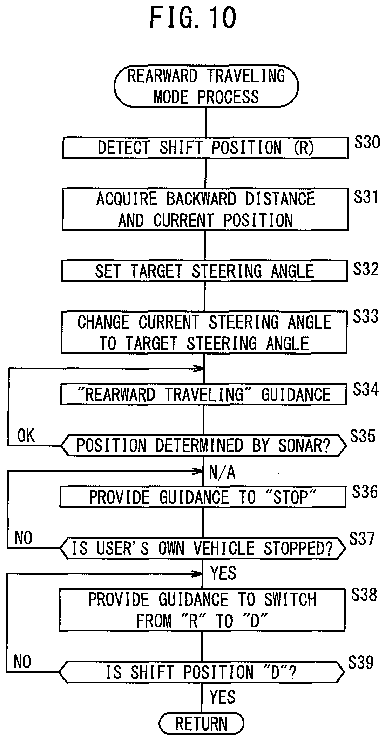

In step S4, the assist control unit 60 carries out the process of the rearward traveling mode. The process of the rearward traveling mode will be described later with reference to FIG. 10.

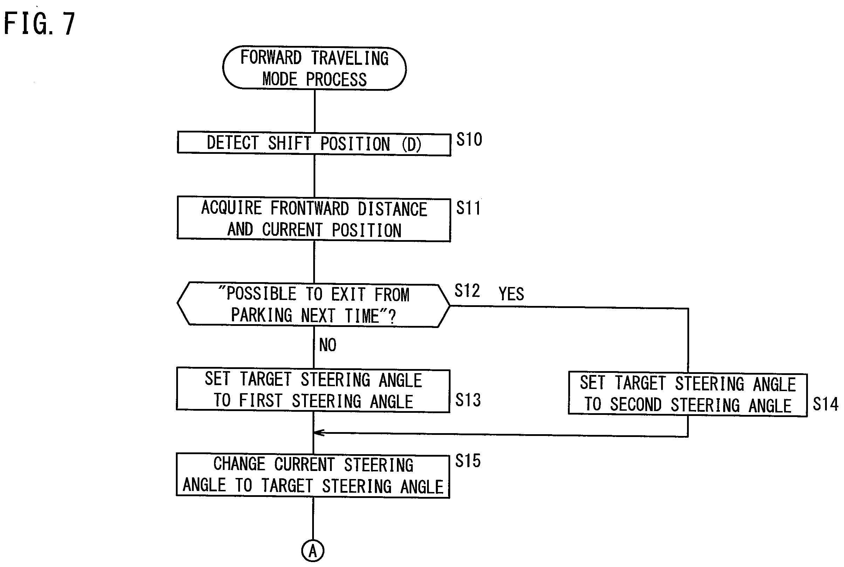

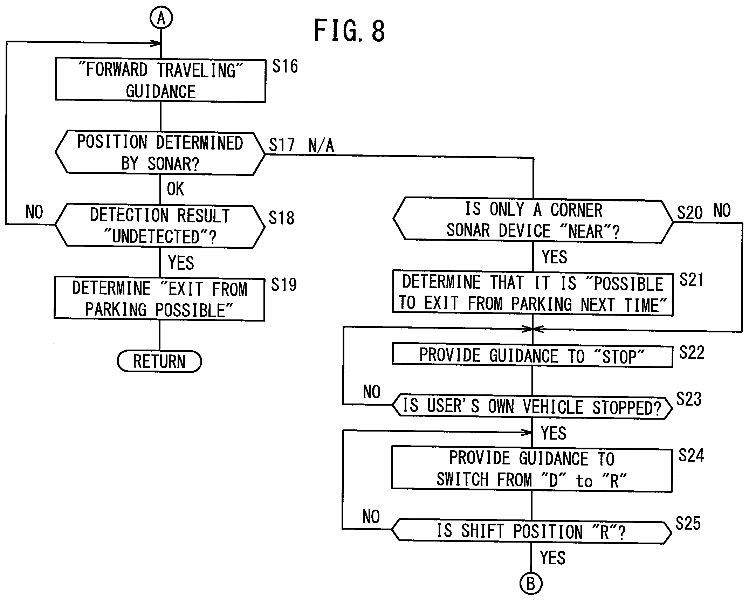

In step S5, the assist control unit 60 carries out the process of the forward traveling mode. The process of the forward traveling mode will be described later with reference to FIGS. 7 and 8.

In step S6, the assist control unit 60 carries out the process of the neutral steering angle control mode. The assist control unit 60 supplies a control signal to instruct the EPS-ECU 76 to change the current steering angle θ of the steering wheel 70 to a neutral position (a position in which the turning angle of the front wheels is neutral).

In step S7, the output control unit 62 carries out the process of the end of assistance notification mode. The output control unit 62 supplies an output signal to the navigation device 16 which indicates that the parking exit assist control has ended. Further, the output control unit 62 supplies an output signal to the navigation device 16 to display a button on the touch panel display 40 in order for the driver to indicate that he or she has comprehended that the parking exit assist control is completed. When the driver touches this button, the "parking exit assist control mode" is terminated.

FIGS. 7 and 8 are flowcharts showing the flow of processes in the forward traveling mode of the assist ECU 18.

In step S10, the assist ECU 18 determines from a detection signal of the shift position sensor 30 that the shift position of the shift lever 32 is "D" and initiates the "forward traveling mode".

In step S11, the exit-from-parking trajectory setting unit 56 acquires various information indicative of a positional relationship with obstacles in the vicinity of the user's own vehicle 10. More specifically, the front sonar devices 91 to 94 detect a frontward distance Df between the user's own vehicle 10 and the other front vehicle 101 in front of the user's own vehicle 10. Further, in addition to the frontward distance Df, the exit-from-parking trajectory setting unit 56 obtains the current position Pc (intermediate position Pm) of the user's own vehicle 10. The frontward distance Df is indicative of the distance between the user's own vehicle 10 and the other front vehicle 101 in front of the user's own vehicle 10. The intermediate position Pm is a position at which the user's own vehicle 10 stops and turning back of steering is carried out. At the intermediate position Pm, the traveling direction of the user's own vehicle 10 is switched from forward traveling to rearward traveling, or is switched from rearward traveling to forward traveling. Moreover, the phrase "turning back steering" implies that the steering direction of the user's own vehicle 10 changes from right to left or from left to right while crossing over the neutral position.

In step S12, the exit-from-parking trajectory setting unit 56 determines whether or not it was judged in the previous "forward traveling mode" that "there is a possibility to exit from parking the next time". If it is determined in the previous "forward traveling mode" that "there is a possibility to exit from parking the next time", then in the assist ECU 18, the process proceeds to step S14. If it is not determined in the previous "forward traveling mode" that "there is a possibility to exit from parking the next time", then in the assist ECU 18, the process proceeds to step S13.

In step S13, the exit-from-parking trajectory setting unit 56 sets the size of the target steering angle θtar to a first steering angle θ1, and sets the direction of the target steering angle θtar to the pulling out direction that was selected upon initiation of the parking exit assist control. It should be noted that, even if the current "forward traveling mode" process is the "forward traveling mode" process that was selected as the mode to be transitioned to initially in step S2, the exit-from-parking trajectory setting unit 56 still sets the size of the target steering angle θtar to the first steering angle θ1, and sets the direction of the target steering angle θtar to the pulling out direction that was selected upon initiation of the parking exit assist control.

The first steering angle θ1 is set to a controlled maximum steering angle θmax. The controlled maximum steering angle θmax is set to a value, in view of the structure of the steering mechanism, which is slightly smaller than a limit steering angle θlim of the steering wheel 70 (for example, equivalent to 95% of the limit steering angle θlim) when the front wheels are turned maximally. By setting the target steering angle θtar to the controlled maximum steering angle θmax, it is possible to suppress sounds occurring due to operation of the steering mechanism, which are likely to occur when the steering angle of the steering wheel 70 is in the vicinity of the limit steering angle θlim. Further, it is possible to leave a margin with respect to overshooting in the automatic steering control of the steering wheel 70 by the EPS unit 20.

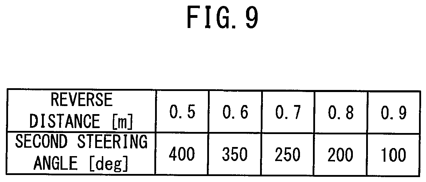

In step S14, the exit-from-parking trajectory setting unit 56 sets the size of the target steering angle θtar to a second steering angle θ2, and sets the direction of the target steering angle θtar to the pulling out direction that was selected upon initiation of the parking exit assist control. The second steering angle θ2 is set corresponding to a distance (a reverse distance) over which the user's own vehicle 10 traveled in reverse in the previous "rearward traveling mode" (a period from having switched from the "forward traveling mode" to the "rearward traveling mode" and until switching back to the "forward traveling mode"). FIG. 9 is a map of the second steering angle θ2. As shown in FIG. 9, the second steering angle θ2 is set to a smaller angle as the reverse distance becomes longer. In the map of FIG. 9, the second steering angle θ2 is shown with respect to representative values of the reverse distance. In the case that the reverse distance lies outside of such representative values and is located in the middle of two adjacent representative values, the second steering angle θ2 is determined by linear interpolation. Further, the second steering angle θ2 may be obtained without using the map, in accordance with a function in which the reverse distance exists as a variable thereof.

In step S15, the assist control unit 60 changes the current steering angle θ of the user's own vehicle 10 to the target steering angle θtar that was set in step S13 or step S14. More specifically, the assist control unit 60 supplies a control signal to the EPS-ECU 76 in order to instruct that a change be made to the target steering angle θtar. Consequently, automatic steering is performed in a state in which the user's own vehicle 10 is stopped at the intermediate position Pm. At this time, in the case that right is selected as the pulling out direction in step S1, steering is performed in a clockwise direction, and in the case that left is selected as the pulling out direction, steering is performed in a counterclockwise direction.

In step S16 (see FIG. 8), the output control unit 62 supplies an output signal to the navigation device 16 indicating that the user's own vehicle 10 should be moved in the forward direction. When the driver performs an operation to release the brake pedal in accordance with guidance provided by the navigation device 16, the user's own vehicle 10 moves in the forward direction along the exiting-from-parking trajectory T under the action of a creep force.

In step S17, the assist continuation determining unit 58 performs a position determination by the front sonar devices 91 to 94. More specifically, it is determined whether or not the detection result of at least one of the front sonar devices 91 to 94 is "near". If the detection result of at least one of the front sonar devices 91 to 94 is "near", then in the assist ECU 18, the process proceeds to step S20. If the detection results of all of the front sonar devices 91 to 94 are not "near", then in the assist ECU 18, the process proceeds to step S18.

In step S18, it is determined whether or not the detection results of all of the front sonar devices 91 to 94 are "undetected". If the detection results of all of the front sonar devices 91 to 94 are "undetected", then in the assist ECU 18, the process proceeds to step S19. If the detection result of any one of the front sonar devices 91 to 94 is "far", then in the assist ECU 18, the process returns to step S16.

In step S19, the assist continuation determining unit 58 determines that the user's own vehicle 10 is capable of exiting from parking ("exit from parking is possible") in a state in which the steering of the user's own vehicle 10 is in a neutral state.

In step S20, the assist continuation determining unit 58 determines whether the detection result of only the front (corner left) sonar device 91 or the front (corner right) sonar device 94 is "near". If the detection result of only the front (corner left) sonar device 91 or the front (corner right) sonar device 94 is "near", then in the assist ECU 18, the process proceeds to step S21. If the detection result of the front (center left) sonar device 92 or the front (center right) sonar device 93 is also "near", then in the assist ECU 18, the process proceeds to step S22.

For example, in the case that the pulling out direction is to the right, it is assumed that only the detection result of the front (corner left) sonar device 91, which is attached to the left front side of the vehicle body 80, is "near". If the detection result of only the front (corner left) sonar device 91 is "near", then it is determined that the angle of the detected direction of the obstacle with respect to the vehicle longitudinal direction of the user's own vehicle 10 is greater than or equal to a predetermined angle. Stated otherwise, an obstacle is present only in the vicinity of the left front side of the user's own vehicle 10, and it can be determined that no obstacle is present in the vicinity of the front surface and in the vicinity of the right front side of the user's own vehicle 10. Thereafter, if turning back of steering is carried out in the "rearward traveling mode", and the vehicle longitudinal direction of the user's own vehicle 10 is turned further to the right, then it can be estimated that in the next "forward traveling mode", the obstacle on the front left side of the user's own vehicle 10 can be avoided, and that exiting from parking is possible.

In step S21, the assist continuation determining unit 58 determines that, in the next "forward traveling mode", there is a possibility for the user's own vehicle 10 to be capable of pulling out from the parking space without performing turning back of steering ("there is a possibility to exit from parking the next time").

In step S22, the output control unit 62 supplies an output signal to the navigation device 16 indicating that the user's own vehicle 10 should be stopped. When the driver performs an operation to depress the brake pedal in accordance with guidance provided by the navigation device 16, the user's own vehicle 10 is stopped.

In step S23, the assist ECU 18 determines whether or not the user's own vehicle 10 is stopped. If the user's own vehicle 10 is stopped, then in the assist ECU 18, the process proceeds to step S24. If the user's own vehicle 10 is not stopped, then in the assist ECU 18, the process returns to step S22.

In step S24, the output control unit 62 supplies an output signal to the navigation device 16 indicating that the shift position should be changed from "D" to "R".

In step S25, the assist ECU 18 determines whether or not the shift position is "R". If the shift position is determined to be "R", then in the assist ECU 18, the process proceeds to step S4 (see FIG. 6). If the shift position is not determined to be "R", then in the assist ECU 18, the process returns to step S24.

FIG. 10 is a flowchart showing the flow of processes in the "rearward traveling mode" of the assist ECU 18.

In step S30, the assist ECU 18 determines from a detection signal of the shift position sensor 30 that the shift position of the shift lever 32 is "R" and initiates the "rearward traveling mode".

In step S31, the exit-from-parking trajectory setting unit 56 acquires various information indicative of a positional relationship with obstacles in the vicinity of the user's own vehicle 10. More specifically, the rear sonar devices 95 to 98 respectively detect a backward distance Db between the user's own vehicle 10 and the other rear vehicle 102 in back of the user's own vehicle 10. Further, in addition to the backward distance Db, the exit-from-parking trajectory setting unit 56 obtains the current position Pc (intermediate position Pm) of the user's own vehicle 10. The backward distance Db is indicative of the distance between the user's own vehicle 10 and the other rear vehicle 102 behind the user's own vehicle 10.

In step S32, the exit-from-parking trajectory setting unit 56 sets the target steering angle θtar. In the case that the process of the "rearward traveling mode" this time is the "rearward traveling mode" process that was selected as the mode to be transitioned to initially in step S2, the target steering angle θtar is set to the neutral steering angle. In the case that the current "rearward traveling mode" is not the "rearward traveling mode" process that was selected as the mode to be transitioned to initially in step S2, a size of a target steering angle θtar is set to a first steering angle θ1 and the direction of the target steering angle θtar is set to the pulling out direction that was selected upon initiation of the parking exit assist control.

Basically, although the size of the target steering angle θtar is set to the first steering angle θ1 in step S32, the size of the target steering angle θtar may also be set to a steering angle which is smaller than the first steering angle θ1. For example, it is assumed that an obstacle such as a curbstone or the like may exist on a side opposite to the pulling out direction of the user's own vehicle 10. In the case that the user's own vehicle 10 travels in reverse, and if the steering angle of the steering wheel 70 is large, there is a high possibility that the user's own vehicle 10 would come into contact with such an obstacle. If an obstacle such as a curbstone or the like on the side opposite to the pulling out direction of the user's own vehicle 10 is detected by the rear sonar devices 95 to 98, the current steering angle θ of the user's own vehicle 10 is automatically steered to a steering angle which is smaller than the first steering angle θ1, whereby contact between the user's own vehicle 10 and the obstacle can be prevented.

Alternatively, the size of the target steering angle θtar may be set to the second steering angle θ2, in the same manner as in step S14 of the "forward traveling mode". In this case, the second steering angle θ2 may be set corresponding to a distance (a frontward distance) over which the user's own vehicle 10 traveled forwardly in the previous "forward traveling mode" (a period from having switched from the "rearward traveling mode" to the "forward traveling mode" and until switching back to the "rearward traveling mode").

In step S33, the assist control unit 60 changes the current steering angle θ of the user's own vehicle 10 to the target steering angle θtar that was set in step S32. More specifically, the assist control unit 60 supplies a control signal to the EPS-ECU 76 in order to instruct that a change be made to the target steering angle θtar. Consequently, automatic steering is performed in a state in which the user's own vehicle 10 is stopped at the intermediate position Pm. At this time, in the case that right is selected as the pulling out direction in step S1, steering is performed in a counterclockwise direction, and in the case that left is selected as the pulling out direction, steering is performed in a clockwise direction.

In step S34, the output control unit 62 supplies an output signal to the navigation device 16 indicating that the user's own vehicle 10 should be moved in the rearward direction. When the driver performs an operation to release the brake pedal in accordance with guidance provided by the navigation device 16, the user's own vehicle 10 moves in the rearward direction along the exiting-from-parking trajectory T under the action of a creep force.

In step S35, the assist continuation determining unit 58 performs a position determination by the rear sonar devices 95 to 98. If the detection result of at least one of the rear sonar devices 95 to 98 is "near", then in the assist ECU 18, the process proceeds to step S36. If the detection results of all of the rear sonar devices 95 to 98 are not "near", then in the assist ECU 18, the process returns to step S34.

In step S36, the output control unit 62 supplies an output signal to the navigation device 16 indicating that the user's own vehicle 10 should be stopped. When the driver performs an operation to depress the brake pedal in accordance with guidance provided by the navigation device 16, the user's own vehicle 10 is stopped.

In step S37, the assist ECU 18 determines whether or not the user's own vehicle 10 is stopped. If the user's own vehicle 10 is stopped, then in the assist ECU 18, the process proceeds to step S38. If the user's own vehicle 10 is not stopped, then in the assist ECU 18, the process returns to step S36.

In step S38, the output control unit 62 supplies an output signal to the navigation device 16 indicating that the shift position should be changed from "R" to "D".

In step S39, the assist ECU 18 determines whether or not the shift position is "D". If the shift position is determined to be "D", then the assist ECU 18 brings the rearward traveling mode process to an end. If the shift position is not determined to be "D", then in the assist ECU 18, the process returns to step S38.

### <Setting of Exit-From-Parking Trajectory T>

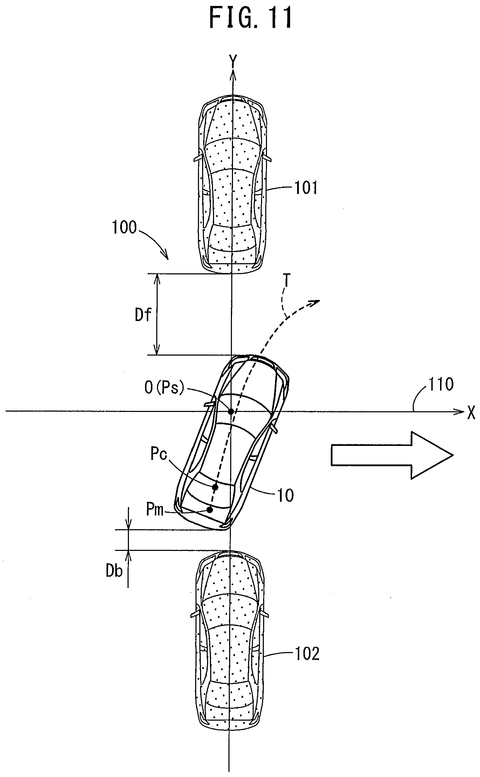

FIG. 11 is a diagram for explaining setting of the exit-from-parking trajectory T in the forward traveling mode. FIG. 11 shows a state in which the user's own vehicle 10 is intending to pull out from a parallel parking space 100 in which the other front vehicle 101 is parked in front of the user's own vehicle 10, and the other rear vehicle 102 is parked behind the user's own vehicle 10. Below, a description will be given concerning setting of the exit-from-parking trajectory T in the forward traveling mode.

The exit-from-parking trajectory setting unit 56 sets an exit-from-parking coordinate system 110 in which the position of the user's own vehicle 10 at the start of the parking exit assist control is set as the origin O. The exit-from-parking coordinate system 110 is a planar coordinate system set on a plane parallel to the road surface. The X-axis of the exit-from-parking coordinate system 110 is an axis lying parallel to the vehicle transverse direction of the user's own vehicle 10, and a rightward direction toward the front of the user's own vehicle 10 is defined as a positive direction. The Y-axis of the exit-from-parking coordinate system 110 is an axis lying parallel to the vehicle longitudinal direction of the user's own vehicle 10, and the forward direction of the user's own vehicle 10 is defined as a positive direction.

The position of the user's own vehicle 10 is set on a straight line connecting the axles of the left and right rear wheels and the center point of the left and right rear wheels. The position of the user's own vehicle 10 at the start of the parking exit assist control is set as an assist starting position Ps. The assist starting position Ps coincides with the origin O of the exit-from-parking coordinate system 110. The current position of the user's own vehicle 10 is defined as a current position Pc. The position of the user's own vehicle 10 at a time, during implementation of the parking exit assist control, when the user's own vehicle 10 is stopped and switching has taken place from the rearward traveling mode to the forward traveling mode is set as the intermediate position Pm. The intermediate position Pm is updated each time that switching takes place between the forward traveling mode and the rearward traveling mode.

During the parking exit assist control and by way of the front sonar devices 91 to 94, the assist ECU 18 constantly detects the distance (hereinafter referred to as a frontward distance Df) between the user's own vehicle 10 and the other front vehicle 101. The frontward distance Df is indicative of a distance in the Y-axis direction between a Y-axis positive direction side end portion of the user's own vehicle 10 and a Y-axis negative direction side end portion of the other front vehicle 101. During the parking exit assist control and by way of the rear sonar devices 95 to 98, the assist ECU 18 constantly detects the distance (hereinafter referred to as a backward distance Db) between the user's own vehicle 10 and the other rear vehicle 102. The backward distance Db is indicative of a distance in the Y-axis direction between a Y-axis negative direction side end portion of the user's own vehicle 10 and a Y-axis positive direction side end portion of the other rear vehicle 102.

Upon switching from the rearward traveling mode to the forward traveling mode, the exit-from-parking trajectory setting unit 56 sets the exit-from-parking trajectory T starting from the intermediate position Pm. When the user's own vehicle 10 is at the intermediate position Pm, the exit-from-parking trajectory setting unit 56 sets as the exit-from-parking trajectory T a trajectory through which the user's own vehicle 10 is capable of passing, in a state in which the steering angle of the steering wheel 70 is set to the target steering angle θtar. Moreover, in the case that the exit-from-parking trajectory T is set for the first time after initiation of the parking exit assist control, the exit-from-parking trajectory setting unit 56 sets the exit-from-parking trajectory T starting from the assist starting position Ps.

The current position Pc of the user's own vehicle 10 may be detected by GPS, or may be obtained using the steering angle of the steering wheel 70 and the travel distance from the intermediate position Pm (or the assist starting position Ps).

Although setting of the exit-from-parking trajectory T in the forward traveling mode has been described above, setting of the exit-from-parking trajectory T in the rearward traveling mode is handled in the same manner.

### [Operations and Effects of the Parking Exit Assist Device 12]

In the case that turning back of steering is carried out when the user's own vehicle 10 pulls out from a parallel parking space 100 during a state of parallel parking, by making the steering angle as large as possible, it is possible to reduce the number of times that steering is turned back. However, if the steering angle is made large in this manner, there is a concern that the steering burden on the driver after the completion of the parking exit assist control will be increased, or that traveling of other vehicles in the travel lane may be hindered.

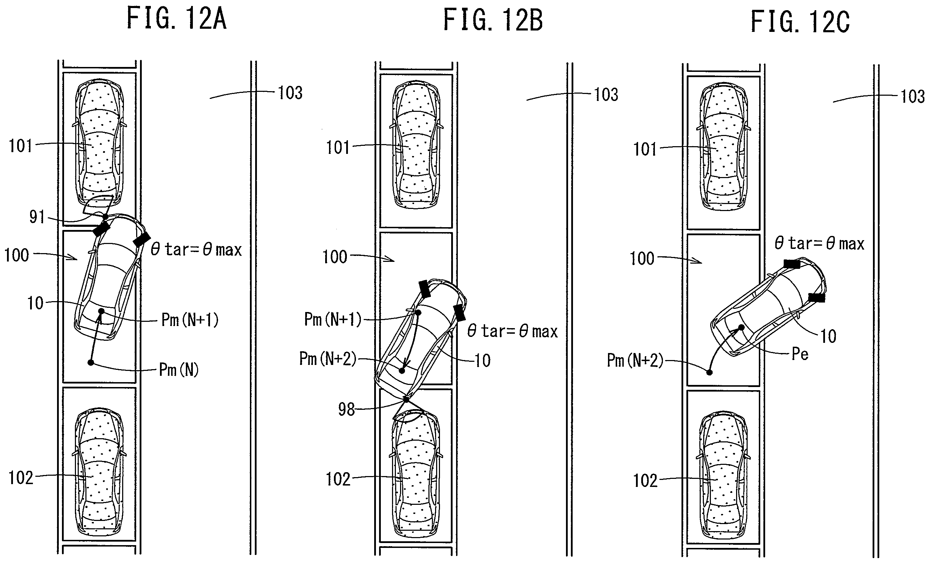

An exemplary case will be described in which, in a parking exit assist control for parallel parking, it is assumed that the size of the target steering angle θtar is controlled at all times to be the controlled maximum steering angle θmax. FIGS. 12A to 12C are diagrams showing positional relationships between the user's own vehicle 10, the other front vehicle 101, and the other rear vehicle 102 during implementation of the parking exit assist control. After the parking exit assist control has started, the "forward traveling mode" or the "rearward traveling mode" is executed, and a time that the current steering angle θ is changed initially to the target steering angle θtar is taken to represent a first time of turning back steering. The position of the user's own vehicle 10 when the first time of turning back steering is carried out is the assist starting position Ps. Thereafter, when the user's own vehicle 10 is at an intermediate position Pm, the number of times that steering is turned back increases each time that the "forward traveling mode" and the "rearward traveling mode" are switched and turning back of steering is carried out. Hereinafter, the intermediate position Pm when turning back of steering is carried out for the Nth time will be noted by the variable Pm(N).

FIG. 12A shows a state at a point in time when the "forward traveling mode" has ended after turning back of steering has occurred for the Nth time. FIG. 12B shows a state at a point in time when the "rearward traveling mode" has ended after turning back of steering has occurred for the (N + 1)th time. FIG. 12C shows a state at a point in time when the "forward traveling mode" has ended after turning back of steering has occurred for the (N + 2)th time.

When the user's own vehicle 10 is stopped at the intermediate position Pm(N), the assist ECU 18 switches the process from the "rearward traveling mode" to the "forward traveling mode". At the intermediate position Pm(N), turning back of steering is carried out for the Nth time. At this time, the size of the target steering angle θtar is set to the controlled maximum steering angle θmax. Thereafter, the driver performs an operation to release the brake pedal, and the user's own vehicle 10 travels forward. The other front vehicle 101 comes into close proximity to the user's own vehicle 10, whereupon the detection result of the front (corner left) sonar device 91 becomes "near". The driver depresses the brake and the user's own vehicle 10 is stopped. The stopped position of the user's own vehicle 10 is set to the intermediate position Pm(N + 1) (see FIG. 12A). At this time, since the detection result of only the front (corner left) sonar device 91 was "near", the assist continuation determining unit 58 determines that "there is a possibility to exit from parking the next time".

When the user's own vehicle 10 is located at the intermediate position Pm(N + 1), the assist ECU 18 switches the process from the "forward traveling mode" to the "rearward traveling mode". At the intermediate position Pm(N + 1), turning back of steering is carried out for the (N + 1)th time. At this time, the size of the target steering angle θtar is set to the controlled maximum steering angle θmax. Thereafter, the driver performs an operation to release the brake pedal, and the user's own vehicle 10 travels rearward. The other rear vehicle 102 comes into close proximity to the user's own vehicle 10, whereupon the detection result of the rear (corner right) sonar device 98 becomes "near". The driver depresses the brake and the user's own vehicle 10 is stopped. The stopped position of the user's own vehicle 10 is set to the intermediate position Pm(N + 2) (see FIG. 12B).

When the user's own vehicle 10 is located at the intermediate position Pm(N + 2), the assist ECU 18 switches the process from the "rearward traveling mode" to the "forward traveling mode". At the intermediate position Pm(N + 2), turning back of steering is carried out for the (N + 2)th time. At this time, the size of the target steering angle θtar is set to the controlled maximum steering angle θmax. Thereafter, the driver performs an operation to release the brake pedal, and the user's own vehicle 10 travels forward. The detection results of all of the front sonar devices 91 to 94 become "undetected". The assist continuation determining unit 58 determines that "exiting from parking is possible". When the driver depresses the brake and the user's own vehicle 10 reaches an end of assistance position Pe, the assist continuation determining unit 58 terminates the parking exit assist control (see FIG. 12C) .

In the example described above, at the time that the parking exit assist control is terminated, the angle of the user's own vehicle 10 in the vehicle longitudinal direction with respect to the direction of a travel lane 103 becomes large. Therefore, when the user's own vehicle 10 merges with the travel lane 103, it is necessary for the driver to steer the steering wheel 70 by a large amount when the user's own vehicle merges with the travel lane. Also, when the parking exit assist control is terminated, the user's own vehicle 10 enters significantly into the travel lane 103. Therefore, there is a concern that the user's own vehicle 10 will hinder traveling of other vehicles in the travel lane 103.

Thus, with the parking exit assist device 12 of the present embodiment, in the next "forward traveling mode" after having determined that "there is a possibility to exit from parking the next time", the exit-from-parking trajectory setting unit 56 sets the size of the target steering angle θtar to the second steering angle θ2 which is smaller than the first steering angle θ1. Consequently, compared to setting it to the first steering angle θ1, when the target steering angle θtar is set to the second steering angle θ2, it is possible to reduce the angle of the user's own vehicle 10 in the vehicle longitudinal direction with respect to the direction of the travel lane 103 at the time that the parking exit assist control is terminated. Thus, the amount of steering made by the driver can be reduced when the user's own vehicle 10 merges with the travel lane 103. Further, compared to setting it to the first steering angle θ1, when the target steering angle θtar is set to the second steering angle θ2, it is possible to reduce the amount at which the user's own vehicle 10 enters into the travel lane 103 at the time that the parking exit assist control is terminated. Thus, obstruction of traveling of other vehicles in the travel lane 103 by the user's own vehicle 10 can be suppressed.

However, if the angle of the second steering angle θ2 is too small, there is a concern that it will not be possible to terminate the parking exit assist control in the next "forward traveling mode" after it has been determined that "there is a possibility to exit from parking the next time".

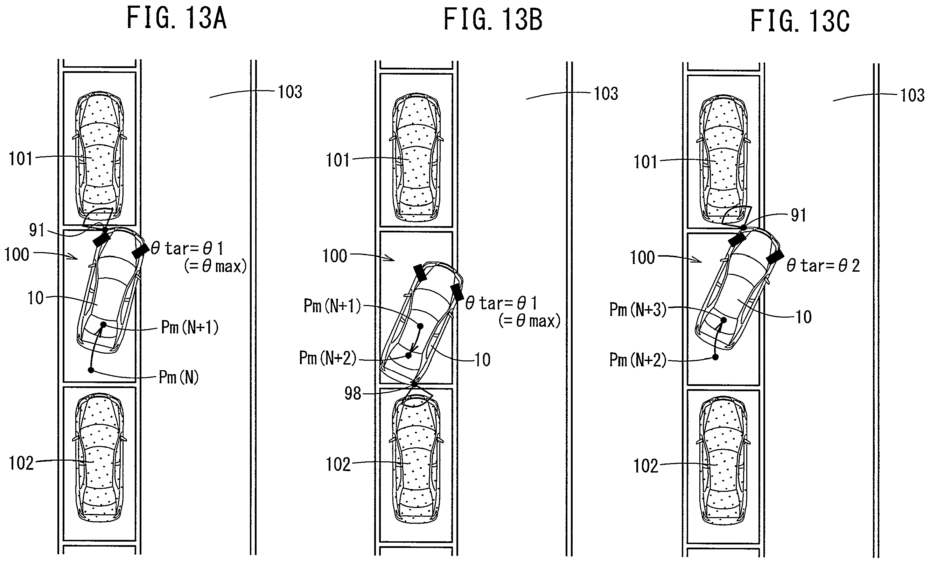

An example will be described assuming a case in which the angle of the second steering angle θ2 is too small. FIGS. 13A to 13C are diagrams showing positional relationships between the user's own vehicle 10, the other front vehicle 101, and the other rear vehicle 102 during implementation of the parking exit assist control.

FIG. 13A shows a state at a point in time when the "forward traveling mode" has ended after turning back of steering has occurred for the Nth time. FIG. 13B shows a state at a point in time when the "rearward traveling mode" has ended after turning back of steering has occurred for the (N + 1)th time. FIG. 13C shows a state at a point in time when the "forward traveling mode" has ended after turning back of steering has occurred for the (N + 2)th time.

When the user's own vehicle 10 is located at the intermediate position Pm(N), the assist ECU 18 switches the process from the "rearward traveling mode" to the "forward traveling mode". At the intermediate position Pm(N), turning back of steering is carried out for the Nth time. At this time, the size of the target steering angle θtar is set to the controlled maximum steering angle θmax. Thereafter, the driver performs an operation to release the brake pedal, and the user's own vehicle 10 travels forward. The other front vehicle 101 comes into close proximity to the user's own vehicle 10, whereupon the detection result of the front (corner left) sonar device 91 becomes "near". The driver depresses the brake and the user's own vehicle 10 is stopped. The stopped position of the user's own vehicle 10 is set to the intermediate position Pm(N + 1) (see FIG. 13A). At this time, since the detection result of only the front (corner left) sonar device 91 was "near", the assist continuation determining unit 58 determines that "there is a possibility to exit from parking the next time".

When the user's own vehicle 10 is located at the intermediate position Pm(N + 1), the assist ECU 18 switches the process from the "forward traveling mode" to the "rearward traveling mode". At the intermediate position Pm(N + 1), turning back of steering is carried out for the (N + 1)th time. At this time, the size of the target steering angle θtar is set to the controlled maximum steering angle θmax. Thereafter, the driver performs an operation to release the brake pedal, and the user's own vehicle 10 travels rearward. The other rear vehicle 102 comes into close proximity to the user's own vehicle 10, whereupon the detection result of the rear (corner right) sonar device 98 becomes "near". The driver depresses the brake and the user's own vehicle 10 is stopped. The stopped position of the user's own vehicle 10 is set to the intermediate position Pm(N + 2) (see FIG. 13B).

When the user's own vehicle 10 is stopped at the intermediate position Pm(N + 2), the assist ECU 18 switches the process from the "rearward traveling mode" to the "forward traveling mode". At the intermediate position Pm(N + 2), turning back of steering is carried out for the (N + 2)th time. At this time, the size of the target steering angle θtar is set to the second steering angle θ2. Thereafter, the driver performs an operation to release the brake pedal, and the user's own vehicle 10 travels forward. The other front vehicle 101 comes into close proximity to the user's own vehicle 10, whereupon the detection result of the front (corner left) sonar device 91 becomes "near". The driver depresses the brake, and the user's own vehicle 10 stops at the intermediate position Pm(N + 3) (see FIG. 13C).

In the example described above, despite the fact that the assist continuation determining unit 58 determined that "there is a possibility to exit from parking the next time" at the time of turning back steering for the (N + 1)th time, the parking exit assist control cannot be terminated in the "forward traveling mode" after having performed turning back of steering for the (N + 2)th time. This is because the target steering angle θtar (= 02) at the time of turning back steering for the (N + 2)th time was too small.

Thus, with the parking exit assist device 12 of the present embodiment, the exit-from-parking trajectory setting unit 56 makes the second steering angle θ2 smaller as the reverse distance of the user's own vehicle 10 in the "rearward travel mode" becomes longer.

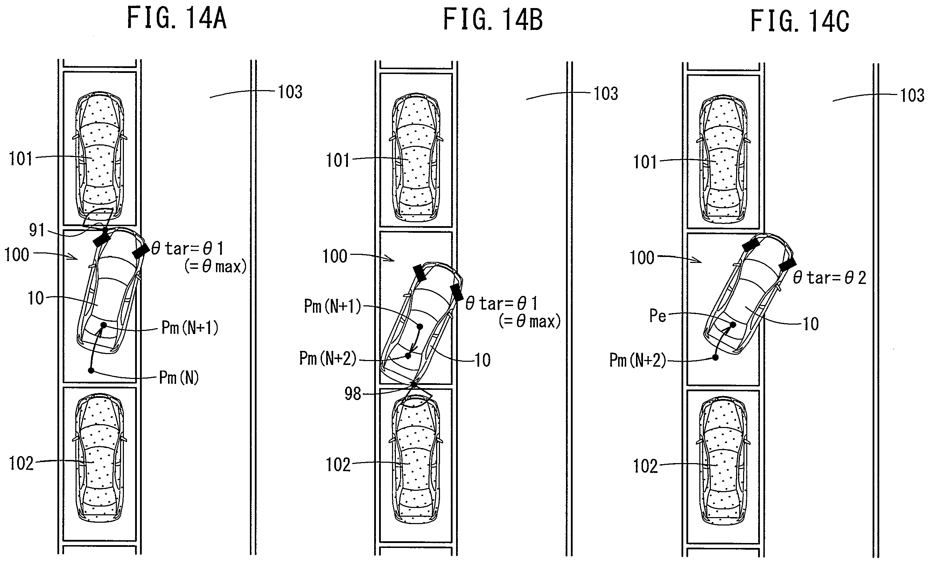

An example will be described assuming a case in which the second steering angle θ2 is set corresponding to the reverse distance in the "rearward traveling mode". FIGS. 14A to 14C are diagrams showing positional relationships between the user's own vehicle 10, the other front vehicle 101, and the other rear vehicle 102 during implementation of the parking exit assist control.

FIG. 14A shows a state at a point in time when the "forward traveling mode" has ended after turning back of steering has occurred for the Nth time. FIG. 14B shows a state at a point in time when the "rearward traveling mode" has ended after turning back of steering has occurred for the (N + 1)th time. FIG. 14C shows a state at a point in time when the "forward traveling mode" has ended after turning back of steering has occurred for the (N + 2)th time.

When the user's own vehicle 10 is stopped at the intermediate position Pm(N), the assist ECU 18 switches the process from the "rearward traveling mode" to the "forward traveling mode". At the intermediate position Pm(N), turning back of steering is carried out for the Nth time. At this time, the size of the target steering angle θtar is set to the controlled maximum steering angle θmax. Thereafter, the driver performs an operation to release the brake pedal, and the user's own vehicle 10 travels forward. The other front vehicle 101 comes into close proximity to the user's own vehicle 10, whereupon the detection result of the front (corner left) sonar device 91 becomes "near". The driver depresses the brake and the user's own vehicle 10 is stopped. The stopped position of the user's own vehicle 10 is set to the intermediate position Pm(N + 1) (see FIG. 14A). At this time, since the detection result of only the front (corner left) sonar device 91 was "near", the assist continuation determining unit 58 determines that "there is a possibility to exit from parking the next time".

When the user's own vehicle 10 is located at the intermediate position Pm(N + 1), the assist ECU 18 switches the process from the "forward traveling mode" to the "rearward traveling mode". At the intermediate position Pm(N + 1), turning back of steering is carried out for the (N + 1)th time. At this time, the size of the target steering angle θtar is set to the controlled maximum steering angle θmax. Thereafter, the driver performs an operation to release the brake pedal, and the user's own vehicle 10 travels rearward. The other rear vehicle 102 comes into close proximity to the user's own vehicle 10, whereupon the detection result of the rear (corner right) sonar device 98 becomes "near". The driver depresses the brake and the user's own vehicle 10 is stopped. The stopped position of the user's own vehicle 10 is set to the intermediate position Pm(N + 2) (see FIG. 14B).

When the user's own vehicle 10 is located at the intermediate position Pm(N + 2), the assist ECU 18 switches the process from the "rearward traveling mode" to the "forward traveling mode". At the intermediate position Pm(N + 2), turning back of steering is carried out for the (N + 2)th time. At this time, the size of the target steering angle θtar is set to the second steering angle θ2. The second steering angle θ2 is set so that the angle becomes smaller as the reverse distance of the user's own vehicle 10 in the previous "rearward traveling mode" is longer. Thereafter, the driver performs an operation to release the brake pedal, and the user's own vehicle 10 travels forward. The detection results of all of the front sonar devices 91 to 94 become "undetected". The assist continuation determining unit 58 determines that "exiting from parking is possible". When the driver depresses the brake and the user's own vehicle 10 stops, the assist continuation determining unit 58 terminates the parking exit assist control (see FIG. 14C).

As the reverse distance of the user's own vehicle 10 in the "rearward traveling mode" is longer, the distance between the user's own vehicle 10 and the other front vehicle 101 at the start of the "forward traveling mode" becomes longer. As the distance between the user's own vehicle 10 and the other front vehicle 101 is longer, it becomes possible for the user's own vehicle 10 to avoid the other front vehicle 101 with a smaller steering angle. Consequently, while avoiding the other front vehicle 101, the amount of steering made by the driver can be reduced when the user's own vehicle 10 merges with the travel lane 103 after completion of the parking exit assist control. Further, obstruction of traveling of other vehicles in the travel lane 103 by the user's own vehicle 10 can be suppressed.

Further, with the parking exit assist device 12 of the present embodiment, the exit-from-parking trajectory setting unit 56 sets the first steering angle θ1 to the controlled maximum steering angle θmax. Consequently, it is possible to minimize the turning radius of the user's own vehicle 10. Thus, the number of times at which steering is turned back during the parking exit assist control can be reduced.

### [Supplemental Considerations]

The present invention is not limited to the embodiment described above, and it goes without saying that modifications can freely be made thereto within a scope that does not depart from the gist of the present invention.

According to the present embodiment, although automatic steering was described as an example, it is possible for various driving modes to be adopted in which an accelerator pedal (not shown), a brake pedal (not shown), and automatic operations or manual operations of the shift lever 32 are combined.

According to the present embodiment, a configuration is adopted in which automatic steering of the steering wheel 70 is carried out. However, the means by which the current steering angle θ is changed is not limited to this feature. For example, by the EPS-ECU 76 outputting a steer-by-wire command signal to a wheel turning mechanism, the turning angle of the vehicle wheels may be changed to an angle corresponding to a state in which the steering angle of the steering wheel 70 is changed to the current steering angle θ. At this time, the steering angle of the steering wheel 70 need not necessarily be changed. Alternatively, the user's own vehicle 10 may be made to turn by effecting a speed difference between the speed of rotation of an inner wheel and the speed of rotation of an outer wheel. At this time, a turning angle (yaw angle) of the user's own vehicle 10 may be set to an angle corresponding to a state in which the steering angle of the steering wheel 70 is changed to the current steering angle θ.

According to the present embodiment, the target steering angle θtar was described as being a target steering angle of the steering wheel 70. However, the target steering angle θtar may be a turning angle of the vehicle wheels or a yaw angle of the user's own vehicle 10.

According to the present embodiment, although the sonar devices 91 to 98 are used as a means for detecting the frontward distance Df or the backward distance Db, the invention is not limited to this feature. For example, instead of the sonar devices 91 to 98, a distance measuring radar or a stereo camera may be used.

According to the present embodiment, the determinations of "there is a possibility to exit from parking the next time" and "exiting from parking is possible" are made in the "forward traveling mode", however, the determinations of "there is a possibility to exit from parking the next time" and "exiting from parking is possible" may also be made in the "rearward traveling mode".

According to the present embodiment, although the parking exit assist control is terminated after the "forward traveling mode", the parking exit assist control may also be terminated after the "rearward traveling mode".

According to the present embodiment, the determination of "there is a possibility to exit from parking the next time" is made in the event that the detection result of only the front (corner left) sonar device 91 or the front (corner right) sonar device 94 is "near". However, the invention is not limited to this feature. For example, it may be determined that "there is a possibility to exit from parking the next time" in the event that the reverse distance of the user's own vehicle 10 in the "rearward traveling mode" is greater than or equal to a predetermined distance. Further, for example, it may be determined that "there is a possibility to exit from parking the next time" in the event that an angle in the vehicle longitudinal direction of the user's own vehicle 10 after the start of the parking exit assist control with respect to the vehicle longitudinal direction of the user's own vehicle 10 at the start of the parking exit assist control is greater than or equal to a predetermined angle.

According to the present embodiment, in the case it is determined in the "forward traveling mode" that "there is a possibility to exit from parking the next time", then the size of the target steering angle θtar in the next "forward traveling mode" is set to the second steering angle θ2 which is smaller than the first steering angle θ1. However, the method of setting the target steering angle θtar is not limited to this technique. For example, the size of the target steering angle θtar may be set to the second steering angle θ2 in the next "rearward traveling mode", in the event it is determined in the "forward traveling mode" that "there is a possibility to exit from parking the next time".

According to the present embodiment, the second steering angle θ2, which is set as the size of the target steering angle θtar in the next "forward traveling mode", is made smaller as the reverse distance in the "rearward traveling mode" becomes longer, however, the setting method is not limited to this feature. For example, the second steering angle θ2, which is set as the size of the target steering angle θtar in the next "forward traveling mode", may be set to be smaller as the angle of the detected direction of the obstacle detected by the front sonar devices 91 to 94 with respect to the vehicle longitudinal direction of the user's own vehicle 10 becomes larger. Further, for example, the second steering angle θ2, which is set as the size of the target steering angle θtar in the next "forward traveling mode", may be set to be smaller as the angle of the current vehicle longitudinal direction with respect to the vehicle longitudinal direction of the user's own vehicle 10 at the time that the assist control was started becomes larger.

In the case that a user's own vehicle (10) cannot pull out from a parking space without turning back steering, a parking exit assist device (12) carries out a parking exit assist control by setting the size of a target steering angle (θtar) in an exit-from-parking trajectory setting unit (56) to a first steering angle (θ1). On the other hand, in the case that the user's own vehicle (10) is capable of pulling out from the parking space without turning back steering, the parking exit assist device (12) carries out a parking exit assist control by setting the size of a target steering angle (θtar) to a second steering angle (θ2) which is smaller than the first steering angle (θ1).

## Claims

1. A parking exit assist device (12), comprising:
a front detection unit (91, 92, 93, 94) configured to detect at least a frontward distance from a user's own vehicle (10) to a front obstacle (101) in front of the user's own vehicle (10);
a rear detection unit (95, 96, 97, 98) configured to detect at least a backward distance from the user's own vehicle (10) to a rear obstacle (102) behind the user's own vehicle (10);
a target steering angle (θtar) setting unit (56) configured to set a size of a target steering angle (θtar) to a first steering angle (θ1), in a case that a travel direction of the user's own vehicle (10) is switched from one to another or from the other to the one of a forward direction and a reverse direction; and
an assist control unit (60) configured to carry out an assist control to set a steering angle to the target steering angle (θtar);
wherein, in an event that at least one from among the following three conditions is satisfied,
first condition: a travel distance of the user's own vehicle (10) from having switched the travel direction from the one to the other and until switching back from the other to the one is greater than or equal to a predetermined distance;
second condition: when the travel direction is the one, an angle of a detected direction of the front obstacle (101) as detected by the front detection unit (91, 92, 93, 94) with respect to a vehicle longitudinal direction of the user's own vehicle (10), or a detected direction of the rear obstacle (102) as detected by the rear detection unit (95, 96, 97, 98) with respect to the vehicle longitudinal direction of the user's own vehicle (10) is equal to or greater than a predetermined angle; and
third condition: an angle of a current vehicle longitudinal direction of the user's own vehicle (10) with respect to the vehicle longitudinal direction of the user's own vehicle (10) at a time the assist control was started is greater than or equal to a predetermined angle,
when the travel direction is switched from the other to the one, the target steering angle (θtar) setting unit (56) is configured to limit and set the size of the target steering angle (θtar) to a second steering angle (θ2) which is smaller than the first steering angle (θ1), **characterized in that**
the one of the travel directions is the forward direction, and the other is the reverse direction; and
in a case that the travel direction is switched from the forward direction to the reverse direction, and when at least one from among the three conditions of the first condition, the second condition, and the third condition is satisfied, the target steering angle (θtar) setting unit (56) is configured to set the target steering angle (θtar) to the second steering angle (θ2), and set the second steering angle (θ2) responsive to the travel distance in the reverse direction of the user's own vehicle (10) from having switched the travel direction from the forward direction to the reverse direction and until switching back from the reverse direction to the forward direction.

2. The parking exit assist device (12) according to claim 1, wherein the target steering angle (θtar) setting unit (56) is configured to:
set the second steering angle (θ2) to be smaller as the travel distance of the user's own vehicle (10) from having switched the travel direction from the one to the other and until switching back from the other to the one becomes longer;
set the second steering angle (θ2) to be smaller as the angle of the detected direction of the front obstacle (101) as detected by the front detection unit (91, 92, 93, 94) with respect to the vehicle longitudinal direction of the user's own vehicle (10), or the detected direction of the rear obstacle (102) as detected by the rear detection unit (95, 96, 97, 98) with respect to the vehicle longitudinal direction of the user's own vehicle (10) becomes larger; and/or
set the second steering angle (θ2) to be smaller as the angle of the current vehicle longitudinal direction of the user's own vehicle (10) with respect to the vehicle longitudinal direction of the user's own vehicle (10) at the time that the assist control was started becomes larger.

3. The parking exit assist device (12) according to claim 1 or 2, wherein the target steering angle (θtar) setting unit (56) is configured to set the first steering angle (θ1) to a maximum steering angle (θmax) capable of being controlled by the assist control unit (60).

4. The parking exit assist device (12) according to any one of claims 1 to 3, wherein, in a case it is determined that pulling out from a parking space is possible, in accordance with a condition of the front obstacle (101) as detected by the front detection unit (91, 92, 93, 94) at a time of switching the travel direction from the forward direction to the reverse direction, and next time, in accordance with forward traveling after having switched the travel direction from the reverse direction to the forward direction, the target steering angle (θtar) setting unit (56) is configured to set the second steering angle (θ2) to a steering angle between a maximum steering angle (θmax) capable of being controlled by the assist control unit (60) and a minimum steering angle capable of avoiding the front obstacle (101).

## Patentansprüche

1. Auspark-Assistenzvorrichtung (12), umfassend:
eine vordere Erfassungseinheit (91, 92, 93, 94), welche dazu eingerichtet ist, wenigstens eine Distanz von einem Ego-Fahrzeug (10) eines Benutzers nach vorne zu einem vorderen Hindernis (101) vor dem Ego-Fahrzeug (10) des Benutzers zu erfassen;
eine hintere Erfassungseinheit (95, 96, 97, 98), welche dazu eingerichtet ist, wenigstens eine Distanz von dem Ego-Fahrzeug (10) des Benutzers nach hinten zu einem hinteren Hindernis (102) hinter dem Ego-Fahrzeug (10) des Benutzers zu erfassen;
eine Festlegungseinheit (56) für einen Ziel-Lenkwinkel (θtar), welche dazu eingerichtet ist, eine Größe eines Ziel-Lenkwinkels (θtar) auf einen ersten Lenkwinkel (θ1) in einem Fall festzulegen, in welchem eine Fahrtrichtung des Ego-Fahrzeugs (10) des Benutzers von einer zu einer anderen oder von der anderen zu der einen aus einer Richtung nach vorne und einer Richtung nach hinten umgeschaltet wird; und
eine Assistenz-Steuereinheit (60), welche dazu eingerichtet ist, eine Assistenz-Steuerung auszuführen, um einen Lenkwinkel auf dem Ziel-Lenkwinkel (θtar) festzulegen;
wobei, in einem Ereignis, dass wenigstens eine unter den folgenden drei Bedingungen erfüllt ist,
erste Bedingung: eine Fahrtdistanz des Ego-Fahrzeugs (10) des Benutzers, von als die Fahrtrichtung von der einen zu der anderen umgeschaltet worden ist und bis die andere zu der einen zurück umgeschaltet wird, ist größer oder gleich einer vorbestimmten Distanz; zweite Bedingung: wenn die Fahrtrichtung die eine ist, ist ein Winkel einer erfassten Richtung des vorderen Hindernisses (101), wie durch die vordere Erfassungseinheit (91, 92, 93, 94) erfasst, in Bezug auf eine longitudinale Fahrzeugrichtung des Ego-Fahrzeugs (10) des Benutzers oder eine erfasste Richtung des hinteren Hindernisses (102), wie durch die hintere Erfassungseinheit (95, 96, 97, 98) erfasst, in Bezug auf die longitudinale Fahrzeugrichtung des Ego-Fahrzeugs (10) des Benutzers größer oder gleich einem vorbestimmten Winkel; und
dritte Bedingung: ein Winkel einer momentanen longitudinalen Fahrzeugrichtung des Ego-Fahrzeugs (10) des Benutzers ist in Bezug auf die longitudinale Fahrzeugrichtung des Ego-Fahrzeugs (10) des Benutzers zu einer Zeit, zu welcher die Assistenz-Steuerung gestartet worden ist, größer oder gleich einem vorbestimmten Winkel,
wenn die Fahrtrichtung von der anderen zu der einen umgeschaltet wird, die Festlegungseinheit (56) für den Ziel-Lenkwinkel (θtar) dazu eingerichtet ist, die Größe des Ziel-Lenkwinkels (θtar) auf einen zweiten Lenkwinkel (θ2) zu begrenzen und festzulegen, welcher kleiner ist als der erste Lenkwinkel (θ1),
**dadurch gekennzeichnet, dass**
die eine der Fahrtrichtungen die Vorwärtsrichtung ist und die andere die Rückwärtsrichtung ist; und
in einem Fall, in welchem die Fahrtrichtung von der Vorwärtsrichtung zu der Rückwärtsrichtung umgeschaltet wird, und wenn wenigstens eine aus den drei Bedingungen der ersten Bedingung, der zweiten Bedingung und der dritten Bedingung erfüllt ist, die Festlegungseinheit (56) für den Ziel-Lenkwinkel (θtar) dazu eingerichtet ist, den Ziel-Lenkwinkel (θtar) auf den zweiten Lenkwinkel (θ2) festzulegen und den zweiten Lenkwinkel (θ2) in Reaktion auf die Fahrtrichtung in der Rückwärtsrichtung des Ego-Fahrzeugs (10) des Benutzers, von als die Fahrtrichtung von der Vorwärtsrichtung zu der Rückwärtsrichtung umgeschaltet worden ist und bis sie von der Rückwärtsrichtung zu der Vorwärtsrichtung zurück umgeschaltet wird, festzulegen.

2. Auspark-Assistenzvorrichtung (12) nach Anspruch 1, wobei die Festlegungseinheit (56) für den Ziel-Lenkwinkel (θtar) dazu eingerichtet ist:
den zweiten Lenkwinkel (θ2) festzulegen, kleiner zu sein, wenn die Fahrtdistanz des Ego-Fahrzeugs (10) des Benutzers, von als die Fahrtrichtung von der einen zu der anderen umgeschaltet worden ist und bis die andere zu der einen zurück umgeschaltet wird, länger wird; den zweiten Lenkwinkel (θ2) festzulegen, kleiner zu sein, wenn der Winkel der erfassten Richtung des vorderen Hindernisses (101), wie durch die vordere Erfassungseinheit (91, 92, 93, 94) erfasst, in Bezug auf die longitudinale Fahrzeugrichtung des Ego-Fahrzeugs (10) des Benutzers oder die erfasste Richtung des hinteren Hindernisses (102), wie durch die hintere Erfassungseinheit (95, 96, 97, 98) erfasst, in Bezug auf die longitudinale Fahrzeugrichtung des Ego-Fahrzeugs (10) des Benutzers größer wird; und/oder
den zweiten Lenkwinkel (θ2) festzulegen, kleiner zu werden, wenn der Winkel der momentanen longitudinalen Fahrzeugrichtung des Ego-Fahrzeugs (10) des Benutzers in Bezug auf die longitudinale Fahrzeugrichtung des Ego-Fahrzeugs (10) des Benutzers zu der Zeit, zu welcher die Assistenz-Steuerung gestartet worden ist, größer wird.

3. Auspark-Assistenzvorrichtung (12) nach Anspruch 1 oder 2, wobei die Festlegungseinheit (56) für den Ziel-Lenkwinkel (θtar) dazu eingerichtet ist, den ersten Lenkwinkel (θ1) auf einen maximalen Lenkwinkel (θmax) festzulegen, welcher in der Lage ist, durch die Assistenz-Steuereinheit (60) gesteuert zu werden.

4. Auspark-Assistenzvorrichtung (12) nach einem der Ansprüche 1 bis 3, wobei in einem Fall, in welchem es bestimmt wird, dass ein Ausparken aus einem Parkplatz möglich ist, im Einklang mit einem Zustand des vorderen Hindernisses (101), wie durch die vordere Erfassungseinheit (91, 92, 93, 94) erfasst, zu einer Zeit eines Umschaltens der Fahrtrichtung von der Vorwärtsrichtung zu der Rückwärtsrichtung, und das nächste Mal, im Einklang mit einem Fahren nach vorne, nachdem die Fahrtrichtung von der Rückwärtsrichtung zu der Vorwärtsrichtung umgeschaltet worden ist, die Festlegungseinheit (56) für den Ziel-Lenkwinkel (θtar) dazu eingerichtet ist, den zweiten Lenkwinkel (θ2) auf einen Lenkwinkel zwischen einem maximalen Lenkwinkel (θmax), welcher in der Lage ist, durch die Assistenz-Steuereinheit (60) gesteuert zu werden, und einem minimalen Lenkwinkel festzulegen, welcher in der Lage ist, das vordere Hindernis (101) zu vermeiden.

## Revendications

1. Dispositif d'assistance de sortie de stationnement (12), comprenant :
une unité de détection avant (91, 92, 93, 94) configurée pour détecter au moins une distance vers l'avant depuis un propre véhicule (10) d'un utilisateur jusqu'à un obstacle avant (101) devant le propre véhicule (10) de l'utilisateur ;
une unité de détection arrière (95, 96, 97, 98) configurée pour détecter au moins une distance vers l'arrière depuis le propre véhicule (10) de l'utilisateur jusqu'à un obstacle arrière (102) derrière le propre véhicule (10) de l'utilisateur ;
une unité de réglage (56) d'angle de braquage cible (θtar) configurée pour régler une taille d'un angle de braquage cible (θtar) à un premier angle de braquage (01), dans un cas où une direction de déplacement du propre véhicule (10) de l'utilisateur est commutée de l'une à l'autre ou de l'autre à l'une d'une direction avant et d'une direction arrière ; et
une unité de commande d'assistance (60) configurée pour réaliser une commande d'assistance afin de régler un angle de braquage à l'angle de braquage cible (θtar) ;
dans lequel, dans une situation où au moins une parmi les trois conditions suivantes est satisfaite,
première condition : une distance de déplacement du propre véhicule (10) de l'utilisateur depuis la commutation de la direction de déplacement de l'une à l'autre et jusqu'à la commutation inverse de l'autre à l'une est supérieure ou égale à une distance prédéterminée ;
deuxième condition : lorsque la direction de déplacement est l'une, un angle d'une direction détectée de l'obstacle avant (101) tel que détecté par l'unité de détection avant (91, 92, 93, 94) par rapport à une direction longitudinale de véhicule du propre véhicule (10) de l'utilisateur, ou d'une direction détectée de l'obstacle arrière (102) tel que détecté par l'unité de détection arrière (95, 96, 97, 98) par rapport à la direction longitudinale de véhicule du propre véhicule (10) de l'utilisateur est supérieur ou égal à un angle prédéterminé ; et
troisième condition : un angle d'une direction longitudinale de véhicule actuelle du propre véhicule (10) de l'utilisateur par rapport à la direction longitudinale de véhicule du propre véhicule (10) de l'utilisateur au moment où la commande d'assistance a commencé est supérieur ou égal à un angle prédéterminé,
lorsque la direction de déplacement est commutée de l'autre à l'une, l'unité de réglage (56) d'angle de braquage cible (θtar) est configurée pour limiter et régler la taille de l'angle de braquage cible (θtar) à un second angle de braquage (θ2) qui est inférieur au premier angle de braquage (θ1),
**caractérisé en ce que**
l'une des directions de déplacement est la direction avant, et l'autre est la direction arrière ; et
dans un cas où la direction de déplacement est commutée de la direction avant à la direction arrière, et lorsqu'au moins une parmi les trois conditions de la première condition, de la deuxième condition, et de la troisième condition est satisfaite, l'unité de réglage (56) d'angle de braquage cible (θtar) est configurée pour régler l'angle de braquage cible (θtar) au second angle de braquage (02), et régler le second angle de braquage (θ2) en réponse à la distance de déplacement dans la direction arrière du propre véhicule (10) de l'utilisateur depuis la commutation de la direction de déplacement de la direction avant à la direction arrière et jusqu'à la commutation inverse de la direction arrière à la direction avant.

2. Dispositif d'assistance de sortie de stationnement (12) selon la revendication 1, dans lequel l'unité de réglage (56) d'angle de braquage cible (θtar) est configurée pour :
régler le second angle de braquage (θ2) pour être plus petit tandis que la distance de déplacement du propre véhicule (10) de l'utilisateur depuis la commutation de la direction de déplacement de l'une à l'autre et jusqu'à la commutation inverse de l'autre à l'une augmente ;
régler le second angle de braquage (θ2) pour être plus petit tandis que l'angle de la direction détectée de l'obstacle avant (101) tel que détecté par l'unité de détection avant (91, 92, 93, 94) par rapport à la direction longitudinale de véhicule du propre véhicule (10) de l'utilisateur, ou de la direction détectée de l'obstacle arrière (102) tel que détecté par l'unité de détection arrière (95, 96, 97, 98) par rapport à la direction longitudinale de véhicule du propre véhicule (10) de l'utilisateur augmente ; et/ou régler le second angle de braquage (θ2) pour être plus petit tandis que l'angle de la direction longitudinale de véhicule actuelle du propre véhicule (10) de l'utilisateur par rapport à la direction longitudinale de véhicule du propre véhicule (10) de l'utilisateur au moment où la commande d'assistance a commencé augmente.

3. Dispositif d'assistance de sortie de stationnement (12) selon la revendication 1 ou 2, dans lequel l'unité de réglage (56) d'angle de braquage cible (θtar) est configurée pour régler le premier angle de braquage (θ1) à un angle de braquage maximum (θmax) capable d'être commandé par l'unité de commande d'assistance (60).

4. Dispositif d'assistance de sortie de stationnement (12) selon l'une quelconque des revendications 1 à 3, dans lequel, dans un cas où il est déterminé qu'un retrait d'un espace de stationnement est possible, conformément à une condition de l'obstacle avant (101) tel que détecté par l'unité de détection avant (91, 92, 93, 94) à un moment de commutation de la direction de déplacement de la direction avant à la direction arrière, et la fois suivante, conformément à un déplacement avant après la commutation de la direction de déplacement de la direction arrière à la direction avant, l'unité de réglage (56) d'angle de braquage cible (θtar) est configurée pour régler le second angle de braquage (θ2) à un angle de braquage entre un angle de braquage maximum (θmax) capable d'être commandé par l'unité de commande d'assistance (60) et un angle de braquage minimum capable d'éviter l'obstacle avant (101).
